(19) Europäisches Patentamt
European Patent Office
Office européen des brevets

(11) EP 3 692 088 B1

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **18815588.1**

(22) Anmeldetag: **30.11.2018**

(51) Internationale Patentklassifikation (IPC):
***C08G 61/08*** $^{(2006.01)}$ ***B01J 31/22*** $^{(2006.01)}$
***C07F 11/00*** $^{(2006.01)}$

(52) Gemeinsame Patentklassifikation (CPC):
**B01J 31/2278; C07F 11/00; C08G 61/08;**
B01J 31/1805; B01J 31/181; B01J 31/2265; B01J 31/2273; B01J 2231/543; B01J 2531/64; C08G 2261/3325; C08G 2261/418

(86) Internationale Anmeldenummer:
**PCT/EP2018/083208**

(87) Internationale Veröffentlichungsnummer:
**WO 2019/120950 (27.06.2019 Gazette 2019/26)**

(54) **LATENTE KATALYSATOREN MIT CHELATLIGANDEN ZUR POLYMERISATION VON DICYCLOPENTADIEN (DCPD)**

LATENT CATALYSTS WITH CHELATE LIGANDS FOR POLYMERIZATION OF DICYCLOPENTADIENE (DCPD)

CATALYSEURS LATENTS COMPORTANT DES LIGANDS CHÉLATEURS POUR LA POLYMÉRISATION DE DICYCLOPENTADIÈNE (DCPD)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2017 DE 102017130504**

(43) Veröffentlichungstag der Anmeldung:
**12.08.2020 Patentblatt 2020/33**

(73) Patentinhaber: **Universität Stuttgart**
**70174 Stuttgart (DE)**

(72) Erfinder:
- **BUCHMEISER, Michael R.**
  **73630 Remshalden (DE)**
- **ELSER, Iris**
  **70197 Stuttgart (DE)**
- **KORDES, Benjamin Richard**
  **70599 Stuttgart (DE)**

(74) Vertreter: **Meissner Bolte Partnerschaft mbB**
**Patentanwälte Rechtsanwälte**
**Postfach 86 06 24**
**81633 München (DE)**

(56) Entgegenhaltungen:
**WO-A2-2015/162245**

- **IRIS ELSER ET AL: "Molybdenum Imido Alkylidene Complexes Containing N- and C-Chelating N-Heterocyclic Carbenes", ORGANOMETALLICS, Bd. 35, Nr. 24, 15. Dezember 2016 (2016-12-15), Seiten 4106-4111, XP055568355, US ISSN: 0276-7333, DOI: 10.1021/acs.organomet.6b00835**
- **STIJN MONSAERT ET AL: "A highly controllable latent Ruthenium Schiff base olefin metathesis catalyst: catalyst activation and mechanistic studies", JOURNAL OF POLYMER SCIENCE, PART A: POLYMER CHEMISTRY, JOHN WILEY & SONS, INC, US, Bd. 48, Nr. 2, 15. Januar 2010 (2010-01-15), Seiten 302-3010, XP002637381, ISSN: 0887-624X, DOI: 10.1002/POLA.23784 [gefunden am 2009-12-07]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 692 088 B1

## Beschreibung

Die vorliegende Erfindung betrifft latente Katalysatoren mit Chelatliganden auf Basis von Molybdänkomplexen zur Polymerisation von Dicyclopentadien (DCPD). Weitere Aspekte der vorliegenden Erfindung betreffen die Verwendung dieser Katalysatoren zur Herstellung von Polymeren wie Polydicyclopentadienen sowie Verfahren zur Herstellung entsprechender Polymere durch Metathesepolymerisation.

Stand der Technik

Poly(dicyclopentadien) (Poly-DCPD) ist ein polymerer Wirkstoff, welcher sich durch eine gute Chemikalienbeständigkeit, eine hohe Glastemperatur von mehr als 130°C sowie eine hohe Korrosionsresistenz auszeichnet. Ein weiterer Vorteil von Poly-DCPD besteht darin, dass dieses Material durch Oxidation der Oberfläche nach der Polymerisation lackier- bzw. beschichtbar ist, ohne dass zuvor ein Primer auf das Material aufgebracht oder das Material anderweitig chemisch vorbehandelt werden muss. Ein wesentlicher Vorteil von Poly-DCPD gegenüber herkömmlichen Duroplasten, wie Polyestern und Polyepoxiden, besteht darin, dass Letzere relativ spröde sind, so dass, um die Zähigkeit dieser Materialien zu verbessern, Additive, wie Gummi oder Thermoplastpartikel, zugegeben werden müssen. Dies führt jedoch zu einer Erhöhung der Produktionskosten und einer Verkomplizierung des Polymerisationsprozesses und hat negative Auswirkungen auf die Lösungsmittelbeständigkeit, das Kriechverhalten und den Elastizitätsmodul. Im Gegensatz dazu weist Poly-DCPD auch ohne zusätzliche Additive sehr gute Schlagfestigkeiten und -zähigkeiten, insbesondere eine günstige Kerbschlagzähigkeit, auf. Diese Eigenschaften, kombiniert mit einer hohen Steifigkeit, machen Poly-DCPD zu einem äußerst leistungsfähigen Duroplasten. In letzter Zeit wird Poly-DCPD besonders zur Herstellung großer Werkstücke, wie Karosserieteilen für Traktoren und Lastkraftwagen, oder für die Ummantelung von industriellen Elektrolysezellen eingesetzt.

Nach den Verfahren des Standes der Technik wird DCPD mit Hilfe der ringöffnenden Metathesepolymerisation (ROMP) zu Poly-DCPD umgesetzt, beispielsweise durch das *reaction injection molding* (Reaktions-Injektionsformen). Dabei wird ein Reaktionsgemisch aus zwei Komponenten, von denen der wesentliche Anteil aus endo-DCPD besteht, in einer Vorkammer gemischt und anschließend schnell in die Form überführt, um dort unter Erwärmung vollständig auszuhärten.

Problematisch bei den derzeit verwendeten Verfahren ist allerdings eine ungünstig hohe Reaktivität des Katalysators, der, in Kombination mit der hohen Reaktivität des DCPD-Monomers, die Polymerisation nur schwer kontrollierbar macht. Insbesondere muss während der Polymerisation ein sehr enges Zeitfenster eingehalten werden, so dass es nicht immer möglich ist, eine gleichmäßige Mischung zu erzeugen und diese, insbesondere bei dünnen Formkörpern, gleichmäßig in der Form zu verteilen.

Ein gegenwärtig für die Herstellung eines Kunststoffs mit dem Namen Proxima® (auf Basis von DCPD) verwendetes Katalysatorensystem beruht auf einem konventionellen Grubbs-Katalysator. Für dieses Produkt ist allerdings die genaue Zusammensetzung der für den Kunststoff verwendeten Komponente nicht bekannt.

Andere eingesetzte Katalysatorsysteme sind in ihrer Struktur wenig definiert. So wird für den kommerziellen Kunststoff Telene® Tetrakis(tridodecylammonium)-octamolybdat als Bestandteil der DCPD-haltigen Komponente 1 und Ethylaluminiumdichlorid mit Propanol und Tetrachlorsilan als Bestandteil der DCPD-haltigen Komponente 2 des Katalysatorsystems verwendet. Bei dem unter dem Handelsnamen Metton® vertriebenen Poly-DCPD sind Wolfram(IV)chlorid und Wolfram(IV)oxytetrachlorid mit Nonylphenol Teil der Komponente 1, während Ethylaluminiumchlorid als Cokatalysator der zweiten Komponente verwendet wird.

Neben verschiedenen Additiven und Füllstoffen wird zudem häufig eine LewisBase zugegeben. Diese verzögert die Reaktion um eine kurze Zeit, um eine homogene Mischung der Komponenten und vor dem Aushärten des Polymers ein Füllen der Form zu ermöglichen. Die Verzögerung der Polymerisation ist aufgrund der hochreaktiven Katalysatoren aber eine Herausforderung in der Prozessführung, so dass, insbesondere für die Herstellung größerer Bauteile, eine exakte Steuerung der Reaktion durch latente Katalysatoren von Vorteil wäre.

Für die Herstellung von Poly-DCPD wurden darüber hinaus Ruthenium-basierte Katalysatoren vorgeschlagen, die gezielt aktiviert werden können. So wurde von M.R. Buchmeiser et al. (Chemistry - A European Journal, 2010, 16, 12928-12934) ein Katalysator vorgeschlagen, der erst durch Aktivierung mit UV-Licht in der Metathese von DCPD aktiv ist.

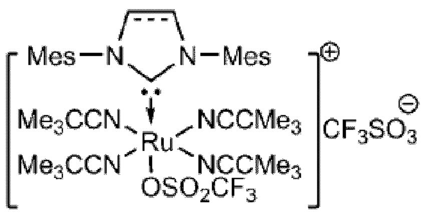

Die Lichtaktivierung erlaubt zwar eine gezielte Initiierung der Polymerisation, sie eignet sich aber vor allem für die Modifizierung und Funktionalisierung von Oberflächen, da hier eine Aktivierung mit Licht unproblematisch möglich ist, wenn dünne Beschichtung erzeugt werden sollen. Für die technische Produktion von massiveren Bauteilen sind licht-aktivierte Katalysatoren hingegen weniger geeignet.

Verpoort et al. beschreiben in J. of Polym. Sci. Part A: Polymer Chemistry, 2010, 48, p. 302-310 Rutheniumkatalysatoren gemäß der unten dargestellten Formel, die bei Raumtemperatur gegenüber DCPD inaktiv sind, aber durch Zugabe von HCl als Cokatalysator aktiviert werden können.

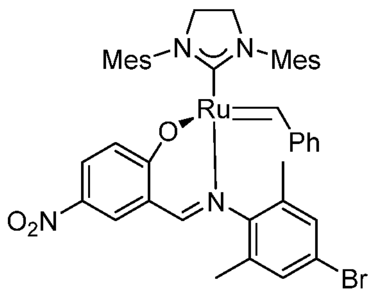

Eine Säureaktivierung würde den Einsatz dieser Katalysatoren im Zweikomponentensystem des *"reaction injection molding"* erlauben. Ein Problem bei diesem Katalysatorsystem besteht jedoch darin, dass das Reaktionsgemisch nach dem Mischen der Komponenten relativ schnell aushärtet, so dass eine schnelle Verarbeitung mit den damit verbundenen Fehlerquellen erforderlich ist.

Elser I. et al in Organometallics 2016, 35 pp. 4106-11 offenbaren Molybdenkomplexe des Typs Mo(N-2,6-$Me_2$-$C_6H_3$)-($CHCMe_2Ph$)(1-(2-pyridyl)methylen-3-mesitylimidazol-2-yliden)$(OTf)_2$, bei denen einer der OTf Liganden durch $OC_6F_5$, $OCMe_3$ oder $B(Ar^F)_4$ oder beide OTf-Liganden durch $OC_6F_5$ und $B(Ar^F)_4$ ersetzt sein können.

Eine Strategie zur Herstellung eines thermisch latenten Katalysators bestand in der Literatur darin, einen chelatisierenden Alkylidenliganden in Grubbs-Katalysatoren der ersten und zweiten Generation einzuführen, wobei die chelatisierende Funktion durch einen Pyridyl-, Imin- oder Alkoxyrest bereitgestellt wird. Bei Erhöhung der Temperatur löst sich diese chelatisierende Funktion vom Metallzentrum und verliert nach dem ersten Metathesezyklus die inhibierende Wirkung, was eine Verzögerung der Initiationsrate bei Raumtemperatur ermöglicht.

Ein noch weiterer Ansatz bestand darin, die Dissoziation eines Phosphanliganden, die den Komplex im Normalfall aktiviert, zu inhibieren. Hafner et al. konnten hierzu mit einem Aren-Ruthenium-Katalysator einen Initiator für die lösemittelfreie ROMP von DCPD bei erhöhter Temperatur entwickeln, der im Monomer bei Raumtemperatur über längere Zeit gelagert werden kann (A. Hafner et al., Angew. Chem. Int. Ed., 1997, 36, 2121-2124). Dieser Katalysator ermöglichte jedoch keine ausreichend schnellen Härtungszeiten.

Ein zusätzliches Problem der aus dem Stand der Technik für die Polymerisierung von DCPD über ROMP beschriebenen Katalysatoren besteht darin, dass die thermische Latenz meist auf einen relativ kurzen Zeitraum begrenzt ist. Vor diesem Hintergrund war es das Ziel der vorliegenden Erfindung, einen möglichst einfachen latenten, thermisch aktivierbaren Katalysator für die ROMP, insbesondere von DCPD vorzuschlagen, der eine einfache Prozessführung auf Basis eines Einkomponentensystems, das alle Komponenten, d.h. Katalysator und Monomer (z.B. DCPD) enthält, erlaubt. Ein entsprechendes Einkomponentensystem sollte auch eine ausreichende Lagerfähigkeit ("Topfzeit") aufweisen, innerhalb der es zu keiner nennenswerten Polymerisation und damit zu keiner Änderung in der Viskosität kommt. Dennoch sollte der Katalysator bei Aktivierung eine ausreichend hohe Aktivität entfalten, damit in kurzer Zeit ein ausgehärtetes Polymer erhalten werden kann.

Ein weiteres Problem vieler bisher bekannter Katalysatoren zur Polymerisation von DCPD besteht in ihrer verhältnismäßig geringen Stabilität gegenüber Luftsauerstoff. Ziel der vorliegenden Erfindung war es daher auch, Katalysatoren für die Polymerisation von DCPD vorzuschlagen, die sich durch eine gute Stabilität gegenüber Luftsauerstoff auszeichnen.

Während aufgrund des hohen Preises von Ruthenium und seiner Toxizität Katalysatoren auf Basis von Molybdän oder Wolfram als besonders geeignet erscheinen, ist derzeit für die ROMP noch kein geeigneter thermisch aktivierbarer Katalysator bekannt.

Beschreibung der Erfindung

Überraschend wurde gefunden, dass die vorstehend erwähnten Aufgaben durch Katalysatoren gelöst werden können, wie sie durch Anspruch 1 angegeben werden. Demzufolge betrifft ein erster Aspekt der vorliegenden Erfindung einen Katalysator gemäß der allgemeinen Formel I

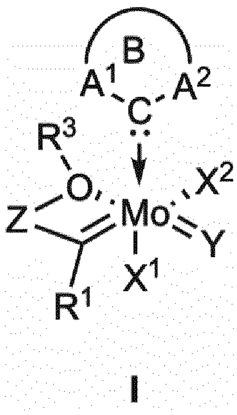

I

der dadurch gekennzeichnet ist, dass $A^1$ für $NR^2$, $A^2$ für $CR^2R^{2'}$ oder $NR^2$ steht,

C für ein Carben-Kohlenstoffatom steht,

der Ring B ein unsubstituierter oder ein ein- oder mehrfach substituierter 5- bis 7-gliedriger Ring ist, der neben $A^1$, $A^2$ bzw. $A^3$ mindestens ein weiteres Heteroatom in Form von Stickstoff, Phosphor, Sauerstoff oder Schwefel enthalten kann und dessen Substituenten die für $R^2$ beschriebene Bedeutung haben können,

$R^2$, $R^{2'}$ und $R^3$, unabhängig voneinander, für H, einen linearen, teilcyclischen oder verzweigten $C_1$-$C_{18}$-Alkyl-, einen linearen, teilcyclischen oder verzweigten $C_2$-$C_{18}$-Alkenyl-, einen $C_3$-$C_{12}$-Cycloalkyl-, einen linearen, teilcyclischen oder verzweigten $C_6$-$C_{100}$-Polyoxaalkyl-, einen $C_5$-$C_{14}$-Aryl- oder -Heteroaryl-Rest, einen $C_5$-$C_{14}$-Aryloxy-, einen linearen, teilcyclischen oder verzweigten $C_1$-$C_{18}$-Perfluoralkyl-, einen linearen, teilcyclischen oder verzweigten $C_1$-$C_{18}$-Perchloralkyl-, einen linearen, teilcyclischen oder verzweigten teilfluorierten $C_1$-$C_{18}$-Alkyl-, insbesondere einen teilfluorierten $C_1$-$C_7$-Alkyl-, einen linearen, teilcyclischen oder verzweigten teilchlorierten $C_1$-$C_{18}$-Alkyl-, einen per- oder teilfluorierten $C_6$-$C_{14}$-Aryl-, einen per- oder teilchlorierten $C_5$-$C_{14}$-Aryl-Rest steht, und, wenn $A^1$ und $A^2$ jeweils für $NR^2$ stehen, $R^2$ gleich oder verschieden sein kann, wobei die $C_5$-$C_{14}$-Aryl- oder -Heteroaryl-Reste und $C_5$-$C_{14}$-Aryloxyreste mit einem oder mehreren linearen, teilcyclischen oder verzweigten $C_1$-$C_{18}$-Alkylresten, substituiert sein können,

$X^1$ bzw. $X^2$ in der Formel I gleich oder verschieden sind und aus der Gruppe umfassend $C_1$-$C_{18}$ Carboxylate, $C_1$-$C_{18}$-Alkoxide, fluorierte $C_1$-$C_{18}$ Alkoxide, $C_1$-$C_{18}$ mono- oder polyhalogenierte Carboxylate, un-, ein- oder mehrfach substituierte $C_6$-$C_{18}$-Mono-, Bi- oder Terphenolate, Trifluormethansulfonat, Trifluoracetat, Chlorid, Bromid oder Iodid, ausgewählt sind, wobei die Substituenten an den Mono-, Bi- oder Terphenolaten neben Halogen die gleiche Bedeutung haben können wie $R^2$,

Y ein N-Adamantyl-, ein N-*tert*-Butyl oder ein $C_6$-$C_{14}$-N-Aryl-Rest, insbesondere ein $C_6$-$C_{10}$-N-Aryl-Rest, ist, wobei der Aryl-Rest ein- oder mehrfach mit Halogen, einem linearen oder verzweigten $C_1$-$C_{18}$ Alkyl-, einem linearen oder verzweigten $C_1$-$C_{18}$ Alkyloxy- und/oder einem unsubstituierten oder substituierten Phenyl-Rest substituiert sein kann, dessen Substituenten die gleiche Bedeutung haben wie $R^2$, Z eine lineare, teilcyclische oder verzweigte $C_1$-$C_{10}$-Alkylen-, eine lineare, teilcyclische oder verzweigte $C_1$-$C_{10}$-Alkylenoxy-, eine lineare, teilcyclische oder verzweigte $C_1$-$C_{10}$-Alkylenthio-, eine lineare, teilcyclische oder verzweigte $C_1$-$C_{10}$-Alkylen-$NR^2$-, eine $C_6$-$C_{10}$-Arylen-, eine $C_6$-$C_{10}$-Arylenoxy-, eine per- oder teilfluorierte $C_6$-$C_{14}$-Arylenoxy-, eine per- oder teilchlorierte $C_6$-$C_{14}$-Arylenoxy-, eine per- oder teilbromierte $C_6$-$C_{14}$-Arylenoxy-, eine $C_6$-$C_{14}$-Arylenthio-, eine per- oder teilfluorierte $C_6$-$C_{14}$-Arylenthio-, eine per- oder teilchlorierte $C_6$-$C_{14}$-Arylenthio-, eine per- oder teilbromierte $C_6$-$C_{14}$-Arylenthio- oder eine $C_6$-$C_{14}$-Arylen-$NR^2$-, eine per- oder teilfluorierte $C_6$-$C_{14}$-Arylen-$NR^2$-, eine per- oder teilchlorierte $C_6$-$C_{14}$-Arylen-$NR^2$-, eine per- oder teilbromierte $C_6$-$C_{14}$-Arylen-$NR^2$-, eine $C_6$-$C_{14}$-Arylen-$PR^2$-, eine per- oder teilfluorierte $C_6$-$C_{14}$-Arylen-$PR^2$-, eine per- oder teilchlorierte $C_6$-$C_{14}$-Arylen-$PR^2$-, eine per- oder teilbromierte $C_6$-$C_{14}$-Arylen-$PR^2$-, ist

$R^1$ in der Formel I H oder ein aliphatischer oder aromatischer Rest ist, insbesondere eine lineare oder verzweigte $C_1$-$C_{18}$ Alkyl-Gruppe, oder eine unsubstituierte oder ein- oder mehrfach substituierte $C_6$-$C_{14}$-Aryl-Gruppe, wobei die Substituenten die für $R^2$ genannten Bedeutungen haben.

Ferner betrifft die Erfindung die Verwendung eines Katalysators gemäß der allgemeinen Formel I und II

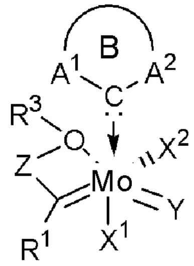

I

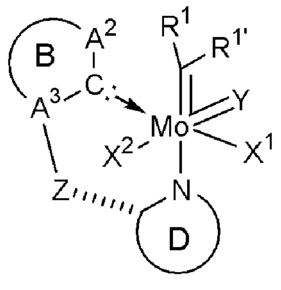

II

der dadurch gekennzeichnet ist, dass $A^1$ für $NR^2$, $A^2$ für $CR^2R^{2'}$ oder $NR^2$ steht, $A^3$ für N steht,

C für ein Carben-Kohlenstoffatom steht,

der Ring B ein unsubstituierter oder ein ein- oder mehrfach substituierter 5- bis 7-gliedriger Ring ist, der neben $A^1$, $A^2$ bzw. $A^3$ mindestens ein weiteres Heteroatom in Form von Stickstoff, Phosphor, Sauerstoff oder Schwefel enthalten kann und dessen Substituenten die für $R^2$ beschriebene Bedeutung haben können,

der Ring D ein unsubstituierter oder ein ein- oder mehrfach substituierter 5- bis 7-gliedriger, bevorzugt ein 6-gliedriger, Ring ist, der neben N ein oder mehrere weitere Heteroatome in Form von Stickstoff, Phosphor, Sauerstoff und oder Schwefel enthalten kann, und bevorzugt aromatisch ist,

$R^2$, $R^{2'}$ und $R^3$, unabhängig voneinander, für H, einen linearen, teilcyclischen oder verzweigten $C_1$-$C_{18}$-Alkyl-, einen linearen, teilcyclischen oder verzweigten $C_2$-$C_{18}$-Alkenyl-, einen $C_3$-$C_{12}$-Cycloalkyl-, einen linearen, teilcyclischen oder verzweigten $C_6$-$C_{100}$-Polyoxaalkyl-, einen $C_5$-$C_{14}$-Aryl- oder -Heteroaryl-Rest, einen $C_5$-$C_{14}$-Aryloxy-, einen linearen, teilcyclischen oder verzweigten $C_1$-$C_{18}$-Perfluoralkyl-, einen linearen, teilcyclischen oder verzweigten $C_1$-$C_{18}$-Perchloralkyl-, einen linearen, teilcyclischen oder verzweigten teilfluorierten $C_1$-$C_{18}$-Alkyl-, insbesondere einen teilfluorierten $C_1$-$C_7$-Alkyl-, einen linearen, teilcyclischen oder verzweigten teilchlorierten $C_1$-$C_{18}$-Alkyl-, einen per- oder teilfluorierten $C_6$-$C_{14}$-Aryl-, einen per- oder teilchlorierten $C_5$-$C_{14}$-Aryl-Rest steht, und, wenn $A^1$ und $A^2$ jeweils für $NR^2$ stehen, $R^2$ gleich oder verschieden sein kann, wobei die $C_5$-$C_{14}$-Aryl- oder -Heteroaryl-Reste und $C_5$-$C_{14}$-Aryloxyreste mit einem oder mehreren linearen, teilcyclischen oder verzweigten $C_1$-$C_{18}$-Alkylresten, substituiert sein können,

$X^1$ bzw. $X^2$ in Formeln I bis II gleich oder verschieden sind und aus der Gruppe umfassend $C_1$-$C_{18}$ Carboxylate, $C_1$-$C_{18}$-Alkoxide, fluorierte $C_1$-$C_{18}$ Alkoxide, $C_1$-$C_{18}$ mono- oder polyhalogenierte Carboxylate, un-, ein- oder mehrfach substituierte $C_6$-$C_{18}$-Mono-, Bi- oder Terphenolate, Trifluormethansulfonat, Trifluoracetat, Chlorid, Bromid oder Iodid, ausgewählt sind, wobei die Substituenten an den Mono-, Bi- oder Terphenolaten neben Halogen die gleiche Bedeutung haben können wie $R^2$,

Y ein N-Adamantyl-, ein N-*tert*-Butyl oder ein $C_6$-$C_{14}$-N-Aryl-Rest, insbesondere ein $C_6$-$C_{10}$-N-Aryl-Rest, ist, wobei der Aryl-Rest ein- oder mehrfach mit Halogen, einem linearen oder verzweigten $C_1$-$C_{18}$ Alkyl-, einem linearen oder verzweigten $C_1$-$C_{18}$ Alkyloxy- und/oder einem unsubstituierten oder substituierten Phenyl-Rest substituiert sein kann, dessen Substituenten die gleiche Bedeutung haben wie $R^2$, Z eine lineare, teilcyclische oder verzweigte $C_1$-$C_{10}$-Alkylen-, eine lineare, teilcyclische oder verzweigte $C_1$-$C_{10}$-Alkylenoxy-, eine lineare, teilcyclische oder verzweigte $C_1$-$C_{10}$-Alkylenthio-, eine lineare, teilcyclische oder verzweigte $C_1$-$C_{10}$-Alkylen-$NR^2$-, eine $C_6$-$C_{10}$-Arylen-, eine $C_6$-$C_{10}$-Arylenoxy-, eine per- oder teilfluorierte $C_6$-$C_{14}$-Arylenoxy-, eine per- oder teilchlorierte $C_6$-$C_{14}$-Arylenoxy-, eine per- oder teilbromierte $C_6$-$C_{14}$-Arylenoxy-, eine $C_6$-$C_{14}$-Arylenthio-, eine per- oder teilfluorierte $C_6$-$C_{14}$-Arylenthio-, eine per- oder teilchlorierte $C_6$-$C_{14}$-Arylenthio-, eine per- oder teilbromierte $C_6$-$C_{14}$-Arylenthio- oder eine $C_6$-$C_{14}$-Arylen-$NR^2$-, eine per- oder teilfluorierte $C_6$-$C_{14}$-Arylen-$NR^2$-, eine per- oder teilchlorierte $C_6$-$C_{14}$-Arylen-$NR^2$-, eine per- oder teilbromierte $C_6$-$C_{14}$-Arylen-$NR^2$-, eine $C_6$-$C_{14}$-Arylen-$PR^2$-, eine per- oder teilfluorierte $C_6$-$C_{14}$-Arylen-$PR^2$-, eine per- oder teilchlorierte $C_6$-$C_{14}$-Arylen-$PR^2$-, eine per- oder teilbromierte $C_6$-$C_{14}$-Arylen-$PR^2$-, ist

$R^1$ und $R^{1'}$ in den Formeln I bis II, unabhängig voneinander, H oder ein aliphatischer oder aromatischer Rest sind,

insbesondere eine lineare oder verzweigte $C_1$-$C_{18}$ Alkyl-Gruppe, oder eine unsubstituierte oder ein- oder mehrfach substituierte $C_6$-$C_{14}$-Aryl-Gruppe, wobei die Substituenten die für $R^2$ genannten Bedeutungen zur Herstellung von Polymeren durch ringöffnende Metathesepolymerisation (ROMP), und ein Verfahren zur Herstellung von entsprechenden Polymeren. Bevorzugte Ausgestaltungen der erfindungsgemäßen Katalysatoren ergeben sich aus den Ansprüchen 2 bis 8, während der Anspruch 10 eine bevorzugte Ausgestaltungen der erfindungsgemäßen Verwendungslehre und die Ansprüche 12 bis 14 bevorzugte Ausgestaltungen der erfindungsgemäßen Verfahrenslehre darstellen.

Die vorstehend angegebenen Katalysatoren sind in Bezug auf die ringöffnende Metathesepolymerisation "latent", d.h. dass sie bei Umgebungstemperatur (25°C) ohne externe Stimulierung keine Metathesepolymerisation initiieren. Die Stimulation der Katalysatoren erfolgt in der Regel durch Erhitzen des Katalysators in Mischung mit dem zu polymerisierende Monomer/Monomeren. Wenn im Rahmen dieser Erfindung daher von einem "latenten Katalysator" oder einem "Katalysator mit latenter Wirkung" die Rede ist, so ist dies so zu verstehen, dass der Katalysator die Eigenschaft der Latenz von Natur aus aufweist, ohne dass hierzu irgendwelche Modifikationen erforderlich sind. Die Angabe "Katalysator gemäß der Formel I oder II" ist demzufolge äquivalent zur Angabe "latenter Katalysator gemäß der Formel I oder II" und "Katalysator gemäß der Formel I oder II mit latenter Wirkung".

Für die erfindungsgemäßen Carbenkomplexe der allgemeinen Formeln I und II ist es bevorzugt, wenn die für die Substituenten $R^2$ und $R^{2'}$ erwähnte lineare, teilcyclische oder verzweigte $C_1$-$C_{18}$-Alkylgruppe als $C_1$-$C_{10}$-Alkylgruppe, bevorzugt als $C_1$-$C_7$-Alkylgruppe, und insbesondere als $C_1$-$C_4$-Alkylgruppe, vorliegt. Besonders geeignet sind Methyl-, Ethyl- und Propylgruppen.

Die lineare, teilcyclische oder verzweigte $C_2$-$C_{18}$-Alkenylgruppe liegt zweckmäßigerweise in Form einer $C_2$-$C_{10}$-Alkenylgruppe, insbesondere in Form einer $C_2$-$C_7$-Alkenylgruppe und bevorzugt in Form von Butenyl oder Hexenyl vor. Für die $C_3$-$C_{12}$-Cycloalkylgruppe ist es bevorzugt, wenn diese in Form einer $C_3$-$C_6$-Cycloalkylgruppe vorliegt. Als geeignete Gruppen sind in diesem Zusammenhang Cyclopentyl und Cyclohexyl zu nennen. Fall es sich bei dem Substituenten $R^2$ oder $R^{2'}$ um einen linearen, teilcyclischen oder verzweigten $C_6$-$C_{100}$-Polyoxaalkyl-Rest handelt, ist es vorteilhaft, wenn dieser in Form eines $C_6$-$C_{30}$-Polyoxaalkyl-Rests und insbesondere in Form eines $C_6$-$C_{15}$-Polyoxaalkyl-Rests vorliegt. Geeignete Reste sind z.B. Methyloxyethyl oder Methyloxyethyloxy.

Der substituierte oder unsubstituierte $C_5$-$C_{14}$-Aryl- oder -Heteroarylrest liegt bevorzugt in Form eines $C_6$-$C_{14}$-Aryl- oder -Heteroarylrests, insbesondere eines $C_6$-$C_{10}$-Aryl- oder -Heteroaryl-Rests vor. In diesem Zusammenhang haben sich Phenyl-, Naphtyl- oder Ferrocenylreste als besonders geeignet herausgestellt.

Als substituierte oder unsubstituierte $C_5$-$C_{14}$-Aryloxyreste sind $C_6$-$C_{14}$-AryloxyReste und insbesondere $C_6$-$C_{10}$-Aryloxy-Reste bevorzugt. Besonders geeignete unsubstituierte Aryloxyreste sind Phenyloxy oder Naphtyloxy.

Der lineare, teilcyclische oder verzweigte $C_1$-$C_{18}$-perfluorierten Alkyl-Rest liegt insbesondere in Form eines $C_1$-$C_{10}$-perfluorierten Alkyl-Rests, bevorzugt in Form eines $C_1$-$C_7$- perfluorierten Alkyl-Rests, und besonders bevorzugt in Form eines $C_1$-$C_4$-Perfluoroalkyl-Restes vor, wobei Trifluormethyl als Rest am meisten bevorzugt ist.

Ebenso liegt der lineare, teilcyclische oder verzweigte $C_1$-$C_{18}$-perchlorierte Alkyl-Rest, insbesondere in Form eines $C_1$-$C_{10}$-perchlorierten Alkyl-Rests, bevorzugt in Form eines $C_1$-$C_7$-perchlorierten Alkyl-Rests und besonders bevorzugt in Form eines $C_1$-$C_4$-Perchloralkyl-Restes vor, wobei Trichlormethyl als Rest am meisten bevorzugt ist.

Der lineare, teilcyclische oder verzweigte teilfluorierte $C_1$-$C_{18}$-Alkyl-Rest liegt bevorzugt als teilfluorierter $C_1$-$C_{10}$-Alkyl-Rest, und insbesondere als teilfluorierter $C_1$-$C_7$-Alkyl-Rest vor. Ein Beispiel für einen solchen Rest ist Trifluorethyl.

Der lineare, teilcyclische oder verzweigte teilchlorierte $C_1$-$C_{18}$-Alkyl-Rest liegt bevorzugt als teilchlorierter $C_1$-$C_{10}$-Alkyl-Rest und insbesondere als teilchlorierter $C_1$-$C_7$-Alkyl-Rest vor. Ein Beispiel für einen solchen Rest ist Trichlorethyl.

Der perfluorierte $C_5$-$C_{14}$-Aryl-Rest liegt insbesondere als perfluorierter $C_6$-$C_{14}$-Aryl-Rest, bevorzugt als perfluorierter $C_6$-$C_{10}$-Aryl-Rest und besonders bevorzugt in Form eines Pentafluorophenylrests vor.

Ebenso liegt der teilfluorierte $C_5$-$C_{14}$-Aryl-Rest insbesondere als teilfluorierter $C_6$-$C_{14}$-Aryl-Rest, bevorzugt als teilfluorierter $C_6$-$C_{10}$-Aryl-Rest und besonders bevorzugt in Form von Fluorophenyl vor.

Der perchlorierte $C_5$-$C_{14}$-Aryl-Rest liegt insbesondere als perchlorierter $C_6$-$C_{14}$-Aryl-Rest, bevorzugt als perchlorierter $C_6$-$C_{10}$-Aryl-Rest und besonders bevorzugt in Form eines Pentachlorophenylrests vor.

Ebenso liegt der teilchlorierte $C_5$-$C_{14}$-Aryl-Rest insbesondere als teilchlorierter $C_6$-$C_{14}$-Aryl-Rest, bevorzugt als teilchlorierter $C_6$-$C_{10}$-Aryl-Rest und besonders bevorzugt in Form von Chlorophenyl vor.

In einer bevorzugten Ausführungsform können die vorstehend angegebenen $C_5$-$C_{14}$-Aryl- oder -Heteroaryl-Reste und $C_5$-$C_{14}$-Aryloxyreste mit einem oder mehreren linearen, teilcyclischen oder verzweigten $C_1$-$C_{18}$-Alkylresten, insbesondere $C_1$-$C_7$-Alkylresten, substituiert sein.

Wenn $A^1$ und $A^2$ jeweils für $NR^2$ stehen, können die Reste $R^2$ und $R^{2'}$ gleich oder verschieden sein.

Generell gilt es als bevorzugt für den Substituenten $R^2$, sofern er direkt an einen der Substituenten $A^1$ oder $A^2$ gebunden ist, dass er ein von Wasserstoff verschiedener Substituent ist.

Für den Fall, dass $R^2$ und $R^{2'}$ zusammen eine lineare oder verzweigte $C_1$-$C_{18}$-Alkylen-Gruppe bilden, liegt diese bevorzugt als $C_1$-$C_7$-Alkylen-Gruppe und besonders bevorzugt in Form einer Butylen oder Pentylengruppe vor.

$R^3$ ist im Kontext der vorliegenden Erfindung bevorzugt ein per-, teil- oder unhalogenierter Alkylrest, wobei unhalogenierte $C_1$-$C_{18}$-Alkylreste, inbesondere unhalogenierte $C_1$-$C_6$-Alkylreste als weiter bevorzugt gelten. Meist bevorzugt ist $R^3$ ein Methylrest.

Im Rahmen der vorliegenden Erfindung steht $A^1$ für $NR^2$, während $A^2$ für $NR^2$ oder $CR^2R^{2'}$ und bevorzugt für $NR^2$ steht.

Bei dem Ring B handelt es sich um einen heterocyclischen 5- bis 7-gliedrigen Ring, der in direkter Nachbarschaft zum carbenoiden Kohlenstoff (d.h. dem Kohlenstoffatom, das in Form eines Carbens vorliegt) mindestens ein Stickstoffatom sowie weiterhin entweder ein weiteres Stickstoffatom oder quartäres Kohlenstoffatom aufweist. Zusätzlich kann der heterozyklische 5- bis 7-gliedrige Ring mindestens ein weiteres Heteroatom aufweisen, bei dem es sich um ein Stickstoff-, Phosphor-, Sauerstoff- oder Schwefelatom handeln kann. Die Stickstoffatome bzw. Phosphoratome sind in diesem Fall in eine Doppelbindung eingebunden oder weisen einen Substituenten $R^2$ auf, der nicht in Form von Wasserstoff vorliegt, so dass es sich bei den Stickstoff- oder Phosphoratomen im Ring B um tertiäre Amine bzw. Phosphine handelt.

Zudem kann der heterocyclische Ring B substituiert sein, zum Beispiel mit Phenyl oder mit einem weiteren vorzugsweise aromatischen Ring ein bicyclisches oder polycyclisches System bilden. So kann es sich bei dem Ring B beispielsweise um einen benzannelierten, naphthannellierten, Phenanthren- oder Anthrachinonannellierten 5- bis 7-gliedrigen Ring handeln.

Im Rahmen der vorliegenden Erfindung hat es sich als besonders zweckmäßig erwiesen, wenn der Ring B ein aus der Gruppe, umfassend Imidazol-2-yliden, 1,2,3-Triazol-5-yliden, 1,2,4-Triazol-3-yliden oder 1,2,3,4-Tetrazol-5-yliden ausgewählter Heterocyclus ist. Von diesen sind wiederum Imidazol-2-yliden, 1,2,3-Triazol-5-yliden und 1,2,4-Tetrazol-3-yliden bevorzugt; meist bevorzugt ist als Ring B Imidazol-2-yliden.

Für den Ring B ist es weiterhin bevorzugt, wenn der Ring ein- oder mehrfach substituiert ist und einen oder mehrere Substituenten aufweist, die ausgewählt sind aus linearen, teilcyclischen oder verzweigten $C_1$-$C_{18}$-Alkyl-, insbesondere $C_1$-$C_7$-Alkylresten und $C_5$-$C_{14}$-Aryl- oder Heteroarylresten und $C_5$-$C_{14}$-Aryloxyresten, die mit einem oder mehreren linearen, teilcyclischen oder verzweigten $C_1$-$C_{18}$-Alkylresten, insbesondere $C_1$-$C_7$-Alkylresten, substituiert sind. Als besonders bevorzugte Ringe B gelten im Rahmen der vorliegenden Erfindung ein 1-Mesitylen-3-picolylimidazol-2-ylidenrest und ein 1,3-Bismesitylenimidazol-2-ylidenrest.

Bei dem Ring D handelt es sich um einen heterocyclischen 5- bis 7-gliedrigen Ring, der neben N ein oder mehrere Heteroatome in Form von Stickstoff, Phosphor, Sauerstoff oder Schwefel enthalten kann. Enthält der Ring D weitere Heteroatome so sind Stickstoff und Sauerstoff bevorzugt, Stickstoff ist meist bevorzugt. Es ist aber auch möglich, und kann als bevorzugt angesehen werden, wenn der Ring D neben dem das Molybdän koordinierenden N Atom keine weiteren Heteroatome enthält.

Der Ring D kann aliphatisch oder aromatisch sein, wobei aromatisch bevorzugt ist. Alternativ oder zusätzlich ist es bevorzugt, wenn der Ring D ein 5- bis 6-gliedriger Ring, weiter bevorzugt ein 6-gliederiger Ring ist. Meist bevorzugt handelt es sich bei dem Ring D um einen Pyridylring.

Bei dem Metall in dem Katalysator handelt es sich um Molybdän.

Liegt mindestens einer der beiden Substituenten $X^1$ und $X^2$ in Form eines $C_1$-$C_{18}$-Carboxylats vor, so ist es bevorzugt, wenn es sich dabei um ein $C_1$-$C_8$-Carboxylat handelt. Als besonders geeignete Carboxylate sind Acetat, Propionat und Benzoat zu nennen.

Liegt mindestens einer der beiden Substituenten $X^1$ und $X^2$ in Form eines $C_1$-$C_{18}$-Alkoxids vor, so ist es bevorzugt, wenn es sich dabei um ein $C_1$-$C_8$-Alkoxid handelt. Als besonders geeignete Alkoxide sind das 2-Propoxid und das *tert*-Butoxid zu nennen.

Liegt mindestens einer der beiden Substituenten $X^1$ und $X^2$ in Form eines fluorierten $C_1$-$C_{18}$-Alkoxids vor, so ist es bevorzugt, wenn es sich dabei um ein fluoriertes $C_1$-$C_8$-Alkoxid handelt. Als besonders geeignete fluorierten Alkoxide sind das Hexafluoro-2-propoxid und ein Hexafluoro-*tert*-butoxid zu nennen.

Liegt mindestens einer der beiden Substituenten $X^1$ und $X^2$ in Form eines mono- oder polyhalogenierten $C_1$-$C_{18}$-Carboxylats vor, so ist es bevorzugt, wenn es sich dabei um ein mono- oder polyhalogeniertes $C_1$-$C_8$-Carboxylat handelt. Als besonders geeignete mono- oder polyhalogenierte $C_1$-$C_{18}$-Carboxylate sind Trichloracetat, Trifluoracetat, Pentafluoropropionat, Heptafluorobutyrat, und Pentafluorobenzoat zu nennen.

Bevorzugte un-, ein- oder mehrfach substituierte Mono-, Bi- oder Terphenolate sind das 2,6-Diphenylphenolat, 2',2",6',6"-Tetrakis(2-propyl)-2,6-diphenylphenolat und das 2',2",6',6"-Tetramethyl-2,6-diphenylphenolat.

Für die Substituenten $X^1$ und $X^2$ können Substituenten, wie fluorierte und nicht fluorierte $C_1$-$C_{18}$-Alkoxide, insbesondere in Form von $C_1$-$C_4$-Alkoxiden, verwendet werden. Besonders geeignete Alkoxide sind Ethanolat, 2-Propanolat, *tert*-Butanolat, Hexafluoro-2-propoxid oder Hexafluoro-*tert*-butanolat. Meist bevorzugt sind $X^1$ bzw. $X^2$ in Formeln I bis II aus $C_1$-$C_{18}$-Alkoxiden, insbesondere aus $C_1$-$C_7$-Alkoxiden, und Trifluormethansulfonat ausgewählt.

Als Substituent Y kommen die im vorstehenden bezeichneten Substituenten in Betracht. Für bevorzugte Ausführungsformen dieser Substituenten gilt Folgendes:

Der $C_6$-$C_{14}$-N-Aryl-Rest liegt bevorzugt in Form eines $C_6$-$C_{10}$-N-Aryl-Rests vor, wobei der Aryl-Rest ein- oder mehrfach mit Halogen, $C_1$-$C_{18}$-Alkyl-Resten, insbesondere $C_1$-$C_8$-Alkyl-Resten, $C_1$-$C_{18}$-Alkyloxy-Resten, insbesondere $C_1$-$C_8$-Alkyloxy-Resten, wobei Methoxy- oder 2-Propoxy-Gruppen besonders bevorzugt sind, oder einem unsubstituierten oder substituierten Phenyl-Rest, dessen Substituenten die gleiche Bedeutung haben können wie für $R^2$ angegeben, substituiert sein kann.

Als besonders bevorzugte Substituenten Y sind insbesondere 2,6- und 3,5-disubstituierte N-Arylreste, vorzugsweise in Form von N-Phenyl-Resten, zu nennen, bei denen die Substituenten bevorzugt als Alkylreste, wie *tert*-Butyl, *iso*Propyl oder Methyl, oder als Halogene, wie Chlor, Fluor oder Brom oder Gemischen davon, vorliegen. Weiterhin bevorzugte Substituenten Y sind N-Alkylreste, bei denen das Kohlenstoffatom in direkter Nachbarschaft zum Stickstoff ein quartäres Kohlenstoffatom ist. Beispiele solcher N-Alkylreste sind der N-*tert*-Butyl-oder der N-Adamantyl-Rest. Besonders bevorzugte Substituenten Y sind im Rahmen der vorliegenden Erfindung der N-2,6-Dimethylphenyl-, der N-3,5-Dimethylphenyl-, der 2,6-Bis(2-propyl)phenyl-, der Pentafluorophenyl-, der N-2,6-Dichlorphenyl-, der 2-*tert*-Butylphenyl-, der N-*tert*-Butyl- sowie der N-Adamantyl-Rest.

Für bevorzugte Ausgestaltungen des Substituenten Z gilt Folgendes:

- die lineare, teilcyclische oder verzweigte $C_1$-$C_{10}$-Alkylenoxy-Gruppe ist bevorzugt eine $C_1$-$C_3$-Alkylenoxy-Gruppe und insbesondere eine Ethylenoxy-Gruppe;
- die lineare, teilcyclische oder verzweigte $C_1$-$C_{10}$-Alkylenthio-Gruppe ist bevorzugt eine $C_1$-$C_3$-Alkylenthio-Gruppe und insbesondere eine Ethylenthio-Gruppe;
- die lineare, teilzyklische oder verzweigte $C_1$-$C_{10}$-Alkylen-$NR^2$-Gruppe ist bevorzugt eine $C_1$-$C_3$-Alkylen-$NR^2$-Gruppe und insbesondere eine Ethylen-$NR^2$-Gruppe;
- die $C_6$-$C_{10}$-Arylen-Gruppe ist bevorzugt eine Phenylengruppe und insbesondere eine Phenylengruppe, die über die 1- und 2-Position mit $C(R^1)$= und dem Sauerstoffatom in der Formel I, bzw. $A^3$ und dem Ring D in der Formel II verbunden ist,
- die $C_6$-$C_{14}$-Arylenoxy-Gruppe ist bevorzugt eine $C_6$-$C_{10}$-Arylenoxy-Gruppe, und insbesondere eine 2-Phenylenoxygruppe;
- die perfluorierte $C_6$-$C_{14}$-Arylenoxy-Gruppe ist bevorzugt eine perfluorierte $C_6$-$C_{10}$-Arylenoxy-Gruppe und insbesondere eine Tetrafluorphenyl-2-en-oxygruppe;
- die teilfluorierte $C_6$-$C_{14}$-Arylenoxy-Gruppe ist bevorzugt eine teilfluorierte $C_6$-$C_{10}$-Arylenoxy-Gruppe und insbesondere eine Fluorphenyl-2-en-oxygruppe;
- die perchlorierte $C_6$-$C_{14}$-Arylenoxy-Gruppe ist bevorzugt eine perchlorierte $C_6$-$C_{10}$-Arylenoxy-Gruppe und insbesondere eine Tetrachlorphenyl-2-en-oxygruppe;
- die teilchlorierte $C_6$-$C_{14}$-Arylenoxy-Gruppe ist bevorzugt eine teilchlorierte $C_6$-$C_{10}$-Arylenoxy-Gruppe und insbesondere eine Chlorphenyl-2-en-oxygruppe;
- die perbromierte $C_6$-$C_{14}$-Arylenoxy-Gruppe ist bevorzugt eine perbromierte $C_6$-$C_{10}$-Arylenoxy-Gruppe und insbesondere eine Tetrabromphenyl-2-en-oxygruppe;
- die teilbromierte $C_6$-$C_{14}$-Arylenoxy-Gruppe ist bevorzugt eine teilbromierte $C_6$-$C_{10}$-Arylenoxy-Gruppe und insbesondere eine Bromphenyl-2-en-oxygruppe;
- die $C_6$-$C_{14}$-Arylenthio-Gruppe ist bevorzugt eine $C_6$-$C_{10}$-Arylenthio-Gruppe und insbesondere eine 2-Phenylenthiogruppe;
- die perfluorierte $C_6$-$C_{14}$-Arylenthio-Gruppe ist bevorzugt eine perfluorierte $C_6$-$C_{10}$-Arylenthio-Gruppe und insbesondere eine Tetrafluorphenyl-2-enthiogruppe;
- die teilfluorierte $C_6$-$C_{14}$-Arylenthio-Gruppe ist bevorzugt eine teilfluorierte $C_6$-$C_{10}$-Arylenthio-Gruppe und insbesondere eine Fluorphenyl-2-en-thiogruppe;

- die perbromierte $C_6$-$C_{14}$-Arylenthio-Gruppe ist bevorzugt eine perbromierte $C_6$-$C_{10}$-Arylenthio-Gruppe und insbesondere eine Tetrabromphenyl-2-enthiogruppe;

- die teilbromierte $C_6$-$C_{14}$-Arylenthio-Gruppe ist bevorzugt eine teilbromierte $C_6$-$C_{10}$-Arylenthio-Gruppe und insbesondere eine Bromphenyl-2-enthiogruppe;

- die perchlorierte $C_6$-$C_{14}$-Arylenthio-Gruppe ist bevorzugt eine perchlorierte $C_6$-$C_{10}$-Arylenthio-Gruppe und insbesondere eine Tetrachlorphenyl-2-enthiogruppe;

- die teilchlorierte $C_6$-$C_{14}$-Arylenthio-Gruppe ist bevorzugt eine teilchlorierte $C_6$-$C_{10}$-Arylenthio-Gruppe und insbesondere eine Chlorphenyl-2-enthiogruppe;

- die $C_6$-$C_{14}$-Arylen-$NR^2$-Gruppe ist bevorzugt eine $C_6$-$C_{10}$- Arylen-$NR^2$-Gruppe und insbesondere eine N-Methylphenyl-2-en- oder N-Ethylphenyl-2-engruppe;

- die perfluorierte $C_6$-$C_{14}$-Arylen-$NR^2$-Gruppe ist bevorzugt eine perfluorierte $C_6$-$C_{10}$- Arylen-$NR^2$-Gruppe und insbesondere eine N-Methyltetrafluorophenyl-2-en- oder N-Ethyltetrafluorophenyl-2-engruppe;

- die teilfluorierte $C_6$-$C_{14}$-Arylen-$NR^2$-Gruppe ist bevorzugt eine teilfluorierte $C_6$-$C_{10}$-Arylen-$NR^2$-Gruppe und insbesondere eine N-Methylfluorophenyl-2-en- oder N-Ethylfluorophenyl-2-engruppe;

- die perchlorierte $C_6$-$C_{14}$-Arylen-$NR^2$-Gruppe ist bevorzugt eine perchlorierte $C_6$-$C_{10}$-Arylen-$NR^2$-Gruppe und insbesondere eine N-Methyltetrachlorophenyl-2-en- oder N-Ethyltetrachlorophenyl-2-engruppe;

- die teilchlorierte $C_6$-$C_{14}$-Arylen-$NR^2$-Gruppe ist bevorzugt eine teilchlorierte $C_6$-$C_{10}$-Arylen-$NR^2$-Gruppe und insbesondere eine N-Methylchlorophenyl-2-en- oder N-Ethylchlorophenyl-2-engruppe;

- die perbromierte $C_6$-$C_{14}$-Arylen-$NR^2$-Gruppe ist bevorzugt eine perbromierte $C_6$-$C_{10}$- Arylen-$NR^2$-Gruppe und insbesondere eine N-Methyltetrabromphenyl-2-en- oder N-Ethyltetrabromphenyl-2-engruppe;

- die teilbromierte $C_6$-$C_{14}$-Arylen-$NR^2$-Gruppe ist bevorzugt eine teilbromierte $C_6$-$C_{10}$-Arylen-$NR^2$-Gruppe und insbesondere eine N-Methylbromphenyl-2-en- oder N-Ethylbromphenyl-2-engruppe;

- die $C_6$-$C_{14}$-Arylen-$PR^2$-Gruppe ist bevorzugt eine $C_6$-$C_{10}$- Arylen-$PR^2$-Gruppe und insbesondere eine P-Methylphenyl-2-en-, P-Phenyl-phenyl-2-en- oder P-Ethylphenyl-2-engruppe;

- die perfluorierte $C_6$-$C_{14}$-Arylen-$PR^2$-Gruppe ist bevorzugt eine perfluorierte $C_6$-$C_{10}$-Arylen-$PR^2$-Gruppe und insbesondere eine P-Methyltetrafluorophenyl-2-en-, Perfluoro-P-phenyl-phenyl-2-en- oder P-Ethyltetrafluorophenyl-2-engruppe;

- die teilfluorierte $C_6$-$C_{14}$-Arylen-$PR^2$-Gruppe ist bevorzugt eine teilfluorierte $C_6$-$C_{10}$-Arylen-$PR^2$-Gruppe und insbesondere eine P-Methylfluorophenyl-2-en- oder P-Ethylfluorophenyl-2-engruppe;

- die perchlorierte $C_6$-$C_{14}$-Arylen-$PR^2$-Gruppe ist bevorzugt eine perchlorierte $C_6$-$C_{10}$-Arylen-$PR^2$-Gruppe und insbesondere eine P-Methyltetrachlorophenyl-2-en- oder P-Ethyltetrachlorophenyl-2-engruppe;

- die teilchlorierte $C_6$-$C_{14}$-Arylen-$PR^2$-Gruppe ist bevorzugt eine teilchlorierte $C_6$-$C_{10}$-Arylen-$PR^2$-Gruppe und insbesondere eine P-Methylchlorophenyl-2-en- oder P-Ethylchlorophenyl-2-engruppe;

- die perbromierte $C_6$-$C_{14}$-Arylen-$PR^2$-Gruppe ist bevorzugt eine perbromierte $C_6$-$C_{10}$-Arylen-$PR^2$-Gruppe und insbesondere eine p-Methyltetrabromphenyl-2-en- oder P-Ethyltetrabromphenyl-2-engruppe;

- die teilbromierte $C_6$-$C_{14}$-Arylen-$PR^2$-Gruppe ist bevorzugt eine teilbromierte $C_6$-$C_{10}$-Arylen-$PR^2$-Gruppe und insbesondere eine P-Methylbromphenyl-2-en- oder P-Ethylbromphenyl-2-engruppe.

Den Substituenten $R^1$ und $R^{1'}$ kommt im Rahmen der hier beschriebenen Katalysatoren die Aufgabe zu, ein Metallalkyliden zur Verfügung zu stellen, das einerseits stabil, andererseits jedoch auch ausreichend metatheseaktiv ist. Besonders geeignete Substituenten $R^1$ und $R^{1'}$ sind daher neben $R^{1'}$ = H große Alkyl- oder Aryl-Reste, die eine gute

sterische Abschirmung des Metallalkylidens gewährleisten. Demzufolge ist es bevorzugt, wenn $R^1$ kein Wasserstoff ist, während $R^{1'}$ ein Wasserstoffatom darstellt. Besonders zweckmäßig ist das Kohlenstoffatom in $R^1$, das in direkter Nachbarschaft zum Metallalkyliden steht, ein quartäres Kohlenstoffatom, das keinen Wasserstoff-Substituenten aufweist. Als Substituenten dieses quartären Kohlenstoffatoms kommen unter anderem auch die für die Substituenten $R^2$ aufgeführten Reste in Betracht. Anhand dieser Vorgaben kann ein geeigneter Substituent $R^1$ fachmännisch ausgewählt werden.

Es hat sich insbesondere als vorteilhaft herausgestellt, wenn $R^1$ in den Formeln I und II für *tert*-Butyl, ein unsubstituiertes oder substituiertes Phenyl, wie 2-(2-Propoxy)phen-1-yl, 2-Methoxyphen-1-yl, 2,4,5-Trimethoxyphenyl, oder Ferrocenyl oder $CMe_2Ph$ steht, wobei die Substituenten am Phenyl die gleiche Bedeutung haben können für wie $R^2$ angegeben, insbesondere aber 2-(2-Propoxy)- oder 2-Methoxy-Substituenten sein können. Zudem hat es sich als vorteilhaft herausgestellt, wenn als $C_1$-$C_{18}$-Alkylgruppe eine $C_1$-$C_{10}$-Alkylgruppe und als $C_6$-$C_{14}$-Arylgruppe eine $C_6$-$C_{10}$-Arylgruppe herangezogen wird. Als besonders günstige $R^1$ kann *tert*-Butyl, ein unsubstituiertes oder substituiertes Phenyl, Ferrocenyl oder $CMe_2Ph$ angegeben werden.

Handelt es sich bei dem Katalysator um einen Komplex gemäß der Formel I, so ist es insbesondere bevorzugt, wenn Z ein Substituent mit zwei Atomen zwischen dem $C(R^1)$= und dem Sauerstoffatom in der Formel I ist, weiter bevorzugt ist es, wenn es sich bei dem Substituenten um einen Ring handelt, wobei es noch weiter bevorzugt ist wenn dieser Ring ein aliphatischer 5-Ring oder ein aromatischer 6-Ring ist. Am meisten ist es bevorzugt, wenn Z ein Phenylenring ist, der über die 1- und 2-Position mit $C(R^1)$= und dem Sauerstoffatom in der Formel I verbunden ist. Der Substituent Z kann weitere Substituenten enthalten, er kann aber auch unsubstituiert sein.

In einer ganz besonders bevorzugten Ausführungsform handelt es sich bei dem Katalysator um einen Katalysator gemäß der Formel I':

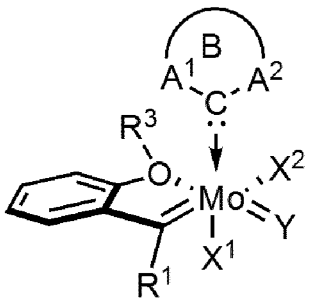

**I'**

Handelt es sich bei dem Katalysator um einen Komplex gemäß der Formel II, so ist es insbesondere bevorzugt, wenn Z ein Substituent mit einem Atom, bevorzugt ein C-Atom, zwischen $A^3$ und dem Ring D in der Formel II ist, weiter bevorzugt ist es, wenn es sich bei dem Substituenten um ein Methylen handelt. Der Substituent Z kann weitere Substituenten enthalten, er kann aber auch, wie bei einem Methylenrest unsubstituiert sein.

In der erfindungsgemäßen Verwendung kann es sich bei dem Katalysator um einen Katalysator gemäß der Formel II' handeln:

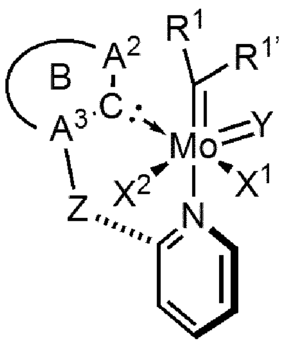

**II'**

Ein weiterer Aspekt der vorliegenden Erfindung befasst sich, wie vorstehend bereits angedeutet, mit der Verwendung des erfindungsgemäßen Katalysators zur der Herstellung von Polymeren durch eine Ring-öffnende Metathesepolymerisation (ROMP). Die so hergestellten Polymere können zum Beispiel als Matrixpolymere für Fasermatrixkomposite, als Kompatibilisierer oder Basispolymer für Fasern verwendet werden. Bevorzugte Monomere zur Herstellung entsprechender Polymere beinhalten cyclische Olefine, wie Cyclobuten, Cyclopenten, Dicyclopentadien, Cylohexen, Cyclohepten, cis-Cycloocten, Cyclooctatetraen, [2.3.0]-Bicylcohepten und Norbonen, sowie Derivate davon. Ein im Kontext der vorliegenden Erfindung besonders geeignetes Monomer ist Dicyclopentadien.

Ein besonderer Vorteil der erfindungsgemäßen Katalysatoren besteht gemäß dem Vorstehenden darin, dass sie sich insbesondere gegenüber hochreaktiven Monomeren für die ROMP durch ihre Latenz auszeichnen, d.h. dass sie bei Umgebungstemperatur (25°C) gegenüber den Monomeren quasi nicht reaktiv sind, während ein Erhitzen des Reaktionsgemischs eine gezielt gesteuerte Polymerisation ermöglicht.

Da Dicyclopentadien im Rahmen der ROMP ein besonders reaktives Monomer darstellt und mit Ruthenium-basierten Katalysatoren in der Regel keine lagerstabilen Mischungen erhalten werden, betrifft ein besonders bevorzugter Aspekt der erfindungsgemäßen Verwendungslehre die Herstellung von Polydicyclopentadienen. Für dieses Monomer kommt die für die erfindungsgemäßen Katalysatoren festgestellte günstige Latenz mit besonderem Vorteil zum Tragen.

Demzufolge betrifft eine bevorzugte Verwendung die Verwendung der angegebenen Katalysatoren zur Herstellung von Polydicyclopentadien.

Einen besonders bevorzugten Aspekt dieser Verwendungslehre stellt die Herstellung von Dicyclopentadienen in Form einer Beschichtung dar, die, wie vorstehend erwähnt, den Vorteil einer direkten Bedruckbarkeit bei gleichzeitig gegebener hoher Schlagfestigkeit und -zähigkeit aufweist.

Ein weiterer Aspekt der vorliegenden Erfindung betrifft, wie vorstehend erwähnt, ein Verfahren zur Herstellung von Polymeren durch ringöffnende Metathesepolymerisation, das die folgenden Schritte umfasst:

(i) Inkontaktbringen eines wie vorstehend für die erfindungsgemäße Verwendung angegebenen Katalysators mit einem eine oder mehrere Doppelbindungen enthaltenden cyclischen Monomer,

(ii) Erwärmen des Reaktionsgemisches auf eine Temperatur, die ausreichend ist, um die Polymerisierungsreaktion zu starten.

In Bezug auf dieses Verfahren ist es bevorzugt, wenn das Reaktionsgemisch auf eine Temperatur von mindestens 60°C, weiter bevorzugt von mindestens 80°C und meist bevorzugt von mindestens 100°C erwärmt wird. Andererseits sollte die Temperatur, auf die das Reaktionsgemisch erwärmt wird, nicht zu hoch sein, damit es nicht zu einer unerwünschten Zersetzung des Katalysators und/oder des Polymers kommen kann. Als zweckmäßige Maximaltemperatur kann in diesem Zusammenhang eine Temperatur von etwa 250°C und bevorzugt maximal 200°C angegeben werden.

Die Menge des Katalysators, der in der Verfahren einbezogen wird, ist nicht von kritischer Relevanz. Die Menge sollte aber einerseits hoch genug sein, dass die Polymerisation nach der Aktivierung für die technische Anwendung schnell genug abläuft. Andererseits sollte die Katalysatormenge aus Kostengesichtspunkten möglichst gering sein. Als geeignete Katalysatormenge kann ein Bereich von 0,0001 bis 5 mol% (bezogen auf die Molmenge des verwendeten Monomer/der verwendeten Monomere), insbesondere 0,001 bis 1 mol%, und besonders bevorzugt 0,05 bis 0,5 mol% angegeben werden.

Im Vorstehenden wurde bereits erwähnt, dass mit der erfindungsgemäßen Kombination von Katalysator und Monomer in einfacher und günstiger Weise Beschichtungen hergestellt werden können. Demzufolge wird das Reaktionsgemisch in einem bevorzugten Aspekt des vorstehend geschilderten Verfahrens vor dem Erwärmen in (ii) als Beschichtung auf ein Substrat aufgebracht. In Bezug auf die Art des Substrats bestehen keine relevanten Einschränkungen, d.h. es kann sich um ein Metall, einen Kunststoff oder auch ein anderes Substrat handeln, wobei Metall- und Kunststoffsubstrate als bevorzugt anzugeben sind.

Weiterhin kann das erfindungsgemäße Verfahren vorteilhaft ausgestaltet sein, indem es als Reaktions-Injektionsformverfahren, Spritzpressverfahren oder Harzinjektionsverfahren ausgeführt wird. Die entsprechenden Verfahren und deren Durchführung sind dem Fachmann ohne Weiteres geläufig.

Über das beschriebene Verfahren kann insbesondere Polydicyclopentadien hergestellt werden. Wie in den folgenden Beispielen gezeigt, zeichnen sich die mit diesem Verfahren hergestellten Polycyclopentadiene durch eine im Vergleich zu mit klassischen Grubbs-Katalysatoren hergestellten Polycyclopentadienen geringere Quellbarkeit aus, was wiederum auf einen höheren Vernetzungsgrad schließen lässt. Daraus wiederum lassen sich grundsätzlich weitere günstige Materialeigenschaften wie z. B. eine höhere Festigkeit oder Formbeständigkeit ableiten. In einer bevorzugten Ausführungsform weist das Polycyclopentadien ein Quellvermögen, bestimmt wie im Beispielteil beschrieben, von 100 % oder weniger, weiter bevorzugt 50 % oder weniger, noch weiter bevorzugt 30 % oder weniger, noch weiter bevorzugt 10 % oder weniger und meist bevorzugt 2 % oder weniger auf.

Die Erfindung soll nachfolgend anhand von Beispielen näher erläutert werden.

**Beispiele**

Übersicht der untersuchten Katalysatoren

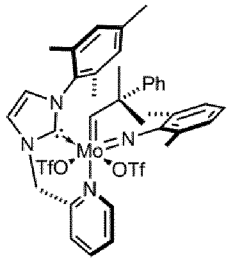

**1**

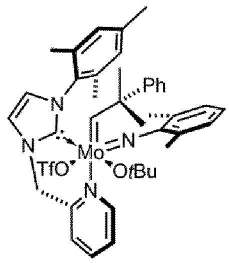

**2**

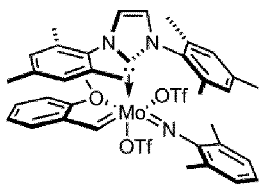

**3**

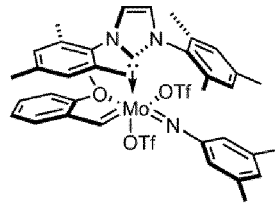

**4**

**Beispiel 1:** Herstellung von **1**

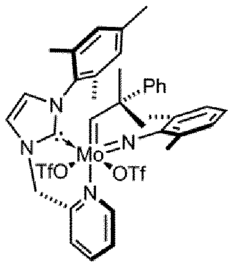

**1**

1-Mesityl-3-picolyl-imidazoliumbromid (429 mg, 1.2 mmol) wurde in Benzol gelöst und eine Lösung von KHMDS (239 mg, 1.2 mmol) in Benzol wurde zugegeben. Nach einer Stunde wurde die braun-rote Suspension über Celite gefiltert. Das Filtrat wurde langsam zu einer Lösung von Mo(N-2,6-$Me_2$-$C_6H_3$)($CHCMe_2Ph$)$(OTf)_2$DME (880 mg, 1.20 mmol) in Benzol zugegeben. Nach einigen Minuten wurde die Bildung eines gelben Niederschlags beobachtet. Nach zwei Stunden wurde das Produkt als gelber Feststoff abfiltriert, mit Diethylether gewaschen und aus einer Mischung von Pentan und Dichlormethan kristallisiert. **1** wurde in 52% Ausbeute in der Form gelber Kristalle erhalten. $^1$H NMR ($CD_2Cl_2$): $\delta$= 14.36 (s, 1H), 9.12 (d, 1H, $^3J_{HH}$ = 5.4 Hz), 8.00 (t, 2H, $^3J_{HH}$ = 8.35 Hz), 7.62 - 7.58 (m, 3H), 7.35 -7.31 (m, 3H), 7.21- 7.17 (m, 2H), 7.14- 7.12 (m, 1H), 7.03 - 6.99 (m, 1H), 6.92- 6.89 (m, 3H), 6.49 (d, 2H), 5.58- 5.36 (m, 2H), 2.21 (s, 3H), 1.98 (br s, 6H), 1.75 (s, 3H), 1.62 (s, 6H), 1.41 (s, 3H) ppm. $^{19}$F NMR ($CD_2Cl_2$): $\delta$ = -77.26 (s, 3F), -77.59 (s, 3F) ppm. $^{13}$C NMR ($CD_2Cl_2$): $\delta$ = 330.6, 327.5, 183.4, 182.4, 158.4, 153.6, 153.4 152.8, 151.9, 149.5, 148.8, 146.7, 144.3, 140.9, 140.6, 140.4, 139.5, 136.5, 135.8, 135.1, 134.7, 134.1, 134.0, 131.2, 131.0, 130.4, 130.0, 129.7, 129.3, 129.0, 128.9, 128.8, 128.7, 128.4, 128.2, 127.4, 126.6, 126.2, 126.1, 126.1, 126.0, 125.5, 125.2, 125.2, 124.9, 121.9, 121.5, 118.8, 118.3, 57.9, 57.6, 55.5, 51.8, 33.8, 31.9, 29.0, 28.5, 21.1, 20.6, 19.2, 18.9, 18.7, 18.7, 18.0 ppm.

**Beispiel 2:** Herstellung von **2**

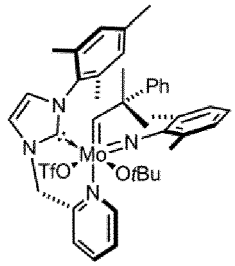

**2**

**1** (80 mg, 0.09 mmol) wurde in Dichlormethan gelöst und auf -35°C abgekühlt. Eine Lösung von Lithium*tert*butoxid (6.9 mg, 0.09 mmol) in Dichlormethan und Diethylether wurde auf -35°C abgekühlt und zur Lösung von **1** zugetropft. Nach drei Stunden wurde das Lösemittel entfernt, der Rückstand in Dichlormethan aufgenommen und über Celite filtriert um das enstandene Lithiumtriflat abzutrennen. Das Filtrat wurde konzentriert, mit Diethylether und Pentan überschichtet und **2** wurde in 57% Ausbeute in der Form gelber Kristalle erhalten. $^1H$ NMR ($CD_2Cl_2$): $\delta$ = 11.87 (s, 1H, $J_{C\text{-}H}$ = 119.7 Hz), 9.23 (d, 1H, $^3J_{HH}$ = 5.4 Hz), 7.98 (d, 1H, $^3J_{HH}$ = 1.7 Hz), 7.80 (t, 1H, $^3J_{HH}$ = 7.6 Hz), 7.69 (d, 1H, $^3J_{HH}$ = 7.6 Hz), 7.41- 7.38 (m, 1H), 7.09 (d, 1H, $^3J_{HH}$ = 1.7 Hz), 7.06- 7.02 (m, 4H), 6.99- 6.92 (m, 7H), 5.68 (d, 1H, $^3J_{HH}$ = 14.9 Hz), 5.35 (d, 1H, $^3J_{HH}$ = 14.9 Hz), 2.37 (s, 3H), 2.19 (s, 6H), 1.95 (s, 3H), 1.74 (s, 3H), 1.47 (s, 3H), 1.17 (s, 3H), 1.08 (s, 9H) ppm. $^{19}F$ NMR ($CD_2Cl_2$): $\delta$ = -78.93 ppm. $^{13}C$ NMR ($CD_2Cl_2$): $\delta$ = 303.2, 183.8, 155.4, 153.0, 149.6, 148.3, 141.2, 140.1, 135.9, 135.6, 134.9, 130.8, 130.46, 128.7, 128.5, 128.5, 126.6, 126.5, 126.5, 125.7, 125.6, 124.7, 124.7, 81.5, 55.7, 55.0, 34.7, 32.2, 31.7, 31.4, 22.9, 21.5, 19.6, 19.2, 18.9, 14.4 ppm.

**Beispiel 3:** Herstellung von **3**

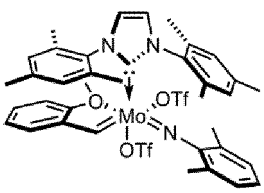

**3**

Mo(N-2,6-$Me_2$-$C_6H_4$)($CHCMe_2Ph$)$(OTf)_2$(IMes) **3a** (100 mg, 0.1 mmol) wurde in Dichlormethan gelöst und 2-Methoxystyrol (42.4 mg, 0.3 mmol) in Dichlormethan wurde zugegeben. Die orangene Lösung wurde für drei Stunden bei Raumtemperatur gerührt. Anschließend wurde das Lösemittel entfernt und der verbliebene Rückstand mit Pentan gewaschen bis ein Feststoff entstand. Der Feststoff wurde abfiltriert und bei -35°C aus einer Mischung von Dichlormethan und Diethylether kristallisiert. **3** wurde in 95% Ausbeute (92 mg) isoliert. $^1H$ NMR ($CD_2Cl_2$, 400 MHz, Hauptisomer, *anti*): $\delta$ = 13.97 (s, 1H, C*H*$CMe_2$Ph, $J_{C\text{-}H}$ = 150.1 Hz), 7.16-6.99 (m, 5H, Ar*H*), 6.96-6.82 (m, 2H, ArH), 6.71-6.55 (m, 4H, ArH), 6.43 (s, 2H, C*H*NC), 4.05 (s, 3H, $OCH_3$), 3.16-2.27 (m, 6H, $CH_3$), 2.17-2.03 (m, 12H, $CH_3$), 1.91 (s, 6H, $CH_3$) ppm; $^{19}F$ NMR (376 MHz, $CD_2Cl_2$): $\delta$ = -77.14 (m, 3F, $CF_3SO_3$), -78.44 (m, 3F, $CF_3SO_3$) ppm; $^{13}C$ NMR (101 MHz, $CD_2Cl_2$): $\delta$ = 300.7 (*C*H$CMe_2$Ph), 186.3 ($CN_{Carben}$), 160.6 ($C_{Ar}$), 156.0 ($C_{Ar}$), 141.9 ($C_{Ar}$), 140.3 ($C_{Ar}$), 135.7 ($C_{Ar}$), 135.3 ($C_{Ar}$), 135.2 ($C_{Ar}$), 134.7 ($C_{Ar}$), 131.7 ($C_{Ar}$), 129.5 ($C_{Ar}$), 128.8 ($C_{Ar}$), 127.8 ($C_{Ar}$), 126.2 ($C_{Ar}$), 123.2 ($C_{Ar}$), 120.9 ($C_{Ar}$), 119.9 (q, $CF_3SO_3$, $J_{CF}$ = 318.0 Hz), 119.3 (q, $CF_3SO_3$, $J_{CF}$ = 318.0 Hz), 110.8, 60.0, 21.2, 18.9, 18.6 ppm. Elementaranalyse (%) berechnet für $C_{39}H_{41}F_6MoN_3O_7S_2$: C 49.95, H 4.41, N 4.48, gefunden: C 49.91, H 4.53, N 4.48.

**Beispiel 4:** Herstellung von **4**

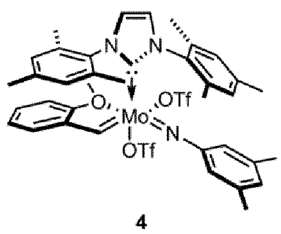

4

Mo(N-3,5-$Me_2$-$C_6H_4$)($CHCMe_2Ph$)$(OTf)_2$(IMes) **4a** (300 mg, 0.316 mmol) wurde in Dichlormethan gelöst und 2-Methoxystyrol (132 μL, 0.947 mmol) wurde mit einer Eppendorfpipette zugegeben. Die orangene Lösung wurde für eine Stunde bei Raumtemperatur gerührt. Anschließend wurde das Lösemittel entfernt und der Rückstand mit Pentan gewaschen bis ein Feststoff entstand. Der Feststoff wurde abfiltriert und bei -35°C aus einer Mischung von Dichlormethan, Diethylether und Pentan kristallisiert. **4** wurde in 61% Ausbeute (180 mg) isoliert. $^{1}$H NMR ($CDCl_3$, 400 MHz): δ = 13.88 (s, 1H, C*H*$CMe_2$Ph, $J_{C\text{-}H}$ = 150.9 Hz), 7.11 (s, 2H, Ar*H*), 7.09-7.04 (m, 2H, Ar*H*), 6.98 (s, 2H, Ar*H*), 6.82 (s, 1H, Ar*H*), 6.77 (s, 2H, Ar*H*), 6.62-6.55 (m, 2H, Ar*H*), 6.45 (s, 2H, C*H*NC), 3.79 (s, 3H, $OCH_3$), 2.25 (s, 6H), 2.18 (s, 6H), 2.11 (s, 6H), 1.80 (s, 6H) ppm. $^{19}$F NMR (376 MHz, $CDCl_3$): δ = -76.94 (s, 3F), -77.89 (s, 3F) ppm. $^{13}$C NMR (101 MHz, $CDCl_3$): δ = 296.3 (*C*$HCMe_2$Ph), 187.75 (*C*$N_{carben}$), 160.0 ($C_{Ar}$), 154.7 ($C_{Ar}$), 139.6 ($C_{Ar}$), 136.7 ($C_{Ar}$), 135.7 ($C_{Ar}$), 135.5 ($C_{Ar}$), 135.1 ($C_{Ar}$), 134.6 ($C_{Ar}$), 131.6 ($C_{Ar}$), 131.1 ($C_{Ar}$), 129.4 ($C_{Ar}$), 129.1 ($C_{Ar}$), 125.6 ($C_{Ar}$), 124.6 ($C_{Ar}$), 124.4 ($C_{Ar}$), 123.7 ($C_{Ar}$), 123.3 ($C_{Ar}$), 123.0 ($C_{Ar}$), 119.6 (q, $CF_3SO_3$, $J_{CF}$ = 320 Hz), 117.4 (q, $CF_3SO_3$, $J_{CF}$ = 320 Hz), 110.9, 59.2, 53.6, 21.2, 21.0, 18.1, 17.8 ppm. Elementaranalyse (%) berechnet für $C_{39}H_{41}F_6MoN_3O_7S_2$: C 49.95, H 4.41, N 4.48; gefunden: C 50.21, H 4.57, N 4.41.

**Beispiel 5:** Bestimmung der Luftstabilität der Katalysatoren

Für die Bestimmung der Luftstabilität wurde eine Probe des Katalysators aus der Schutzgasbox entnommen und für die angegebene Zeit in einer Kristallisierschale im Abzug an Luft gelagert. Anschließend wurde die Probe wieder eingeschleust und eine NMR-Probe wurde in trockenem Lösemittel ($CD_2Cl_2$ bei **1,** $CDCl_3$ bei **2** bis **4**) gelöst.

Die Analyse der NMR Spektren ergab, dass die Verbindung **1** für einen Zeitraum von mindestens 2 Stunden und die Verbindungen **2** bis **4** für einen Zeitraum von mindestens 12 Stunden an der Luft stabil waren (d.h. es wurde kein Zerfall beobachtet).

**Beispiel 6:** DSC Messungen

Bestimmung von $T_{onset,TScan}$ und $T_{exo,max}$ für die Katalysatoren **1,2,3,4:**

Der jeweilige Katalysator (1 Äq., ca. 4-7 mg) wurde in 1,2,4-Trichlorbenzol suspendiert (10 Äq, ca. 3-7 μL) und DCPD (100 Äq.) wurde zugegeben. Die Mischung wurde für fünf Minuten bei Raumtemperatur gerührt und eine Probe für die DSC Messungen wurde entnommen. Die DSC Tiegel wurden in einer Schutzgasbox gepresst und die Probe wurde einer Temperaturscan DSC Messung unterzogen. $T_{onset,TScan}$ wurde als die Temperatur definiert, zu welcher die exotherme Reaktion begann. $T_{exo,max}$ wurde als das Minimum der DSC Kurve definiert. Zusätzlich wurden alle Proben einer zweiten Temperaturscan DSC Messung unterzogen, um vollständiges Härten zu garantieren.

*Heizprogramm TScan:* 0°C für 1 Minute
0°C bis 200°C (220°C); 5 $Kmin^{-1}$

Die für die Katalysatoren **1 - 4** bestimmten $\mathbf{T_{onset,TScan}}$ und $\mathbf{T_{exo,max}}$-Werte, sowie die ermittelten Enthalpien **ΔH** sind in der folgenden Tabelle 1 wiedergegeben.

**Tabelle 1:**

| Katalysator | $T_{onset,TScan}$ | $T_{exo,max}$ | ΔH |
|---|---|---|---|
| 1 | 80°C | 115°C | -140 $Jg^{-1}$ |
| 2 | 70°C | 98°C | -260 $Jg^{-1}$ |
| 3 | 120°C | 183°C | -250 $Jg^{-1}$ |
| 4 | 130°C | 168°C | -260 $Jg^{-1}$ |

**Beispiel 7:** Bestimmung von $T_{onset,isothermal}$ für die Katalysatoren **3** und **4**

Der Katalysator (1 Äq., ca. 4-7 mg) wurde in 1,2,4-Trichlorbenzol (10 Äq, ca. 3-7 μL) suspendiert und DCPD (100 Äq.) wurde zugegeben. Die Mischung wurde für fünf Minuten bei Raumtemperatur gerührt und eine Probe für die DSC Messungen wurde entnommen. Die DSC Tiegel wurden in einer Schutzgasbox gepresst und die Proben für die isothermen DSC Messungen wurden entnommen. Die Proben wurden isothermen DSC Messungen und direkt daran anschließenden Temperaturscan Messungen unterzogen um vollständiges Härten zu garantieren. $T_{onset,isothermal}$ wurde als die maximale Temperatur definiert, bei welcher eine Probe für dreißig Minuten geheizt werden konnte, ohne zu polymerisieren. Hierfür wurden die ermittelten Reaktionsenthalpien aus dem Temperaturscan der thermisch vorbehandelten Probe mit dem der unbehandelten Probe verglichen.

*Heizprogramm für isotherme Messungen:* Angegebene Temperatur für dreißig Minuten halten
Abkühlen auf 0°C
0°C für 1 Minute
0°C bis 200°C; 10 $Kmin^{-1}$

Die gemessenen Enthalpien ΔH für die Temperaturscans der thermisch vorbehandelten Proben mit **3** und **4** in $Jg^{-1}$ sind in der folgenden Tabelle 2 wiedergegeben. Die Enthalpien wurden durch Integration der Fläche unter der Kurve mit Pyris Manager (Perkin Eimer) bestimmt.

**Tabelle 2:**

| Katalysator | Temperatur | | | |
|---|---|---|---|---|
| | 80°C | 100°C | 120°C | 140°C |
| **3** | -250 $Jg^{-1}$ | -240 $Jg^{-1}$ | -240 $Jg^{-1}$ | 0* |
| **4** | -250 $Jg^{-1}$ | -220 $Jg^{-1}$ | 0* | n.b. |
| * = Katalysator zerfällt während des dreißig minütigen Heizens bei 140°C; n.b = nicht bestimmt. | | | | |

**Beispiel 7:** Bestimmung der Latenz der Katalysatoren **1** bis **4**

Der Katalysator (1 Äq., ca. 4-7 mg) wurde in 1,2,4-Trichlorobenzol (10 Äq., ca. 3-7 μL) suspendiert und DCPD (100 Äq.) wurde zugegeben. Die Mischung wurde für fünf Minuten bei Raumtemperatur gerührt und eine Probe für die DSC Messungen wurde entnommen. Die DSC Tiegel wurden in einer Schutzgasbox gepresst. Die Mischung wurde bei Raumtemperatur in der Schutzgasbox gerührt und nach der angegebenen Zeit wurde eine weitere Probe entnommen. Ein Katalysator wurde als latent definiert, wenn die Reaktionsenthalpie der gealterten Probe der der Referenz entsprach.

*Heizprogramm TScan:* 0°C für 1 Minute
0°C bis 200°C; 10 $Kmin^{-1}$

Die gemessenen Enthalpien ΔH für die Temperaturscans der Referenzprobe und der gealterten Proben mit den Katalysatoren **1** bis **4** in $Jg^{-1}$ sind in der folgenden Tabelle 3 wiedergegeben. Die Enthalpien wurden durch Integration der Fläche unter der Kurve mit Pyris Manager (Perkin Eimer) bestimmt.

**Tabelle 3:**

| Katalysator | Zeit | | | | |
|---|---|---|---|---|---|
| | 0 | 3 h | 1 Tag | 2 Tage | 3 Tage |
| **1** | -140 $Jg^{-1}$ | n.b. | -200 $Jg^{-1}$ | n.b. | n.b. |
| **2** | -240 $Jg^{-1}$ | -260 $Jg^{-1}$ | n.b. | n.b. | n.b. |
| **3** | -240 $Jg^{-1}$ | n.b. | -270 $Jg^{-1}$ | -260 $Jg^{-1}$ | -230 $Jg^{-1}$ |
| **4** | -240 $Jg^{-1}$ | n.b. | -210 $Jg^{-1}$ | -240 $Jg^{-1}$ | -250 $Jg^{-1}$ |
| n.b = nicht bestimmt. | | | | | |

Die Ergebnisse der Latenzprüfungen zeigen, dass die untersuchten Katalysatoren im Beobachtungszeitraum latent waren.

**Beispiel 8:** Bestimmung des Quellvermögens von Poly-DCPD hergestellt mittels der Katalysatoren **1 - 4**

Da der Grad der Quervernetzung umgekehrt proportional zum Quellgrad ist, wurde der Quellgrad Q bestimmt. Dazu wurde die entsprechende Polyreaktion in einem Glaszylinder durchgeführt (12 mm Durchmesser). Der Katalysator (1 Äq., ca. 5-7 mg) wurde in 1,2,4- Trichlorbenzol suspendiert (10 Äq., ca. 5-10 μL) und DCPD (250 Äq.) wurde zugegeben. Die Mischung wurde bei der in Tabelle 4 angegebenen Temperatur für 30 bis 90 Minuten erhitzt. Das so erhaltene Polymer wurde für zwölf Stunden am Vakuum getrocknet. Die Masse wurde ermittelt ($m_o$). Dann wurde Toluol (3 mL) zugegeben. Nach zwei Tagen wurde das Toluol abdekantiert und die Masse des gequollenen Polymers ($m_s$) wurde bestimmt. Die Ergebnisse dieser Bestimmungen sind für die Katalysatoren **1** bis **4** in der folgenden Tabelle 4 wiedergegeben.

**Tabelle 4:**

| Präkatalysator | T [°C](i) | *Q (%)*(ii) |
|---|---|---|
| **1**(iii) | 110 | 8(iv) |
| **2**(iii) | 80 | 34 |
| **3**(iii) | 140 | 0 |
| **4**(iii) | 130 | 0 |
| **4**(iii) | 155 | 0 |

(i) Reaktionstemperatur; (ii) Quellvermögen $Q = \frac{(m_q - m_0)}{m_0}$ . 100% mit $m_q$ = Masse des gequollenen Polymers und $m_0$ = Masse des Polymers vor dem Quellen; (iii) Präkatalysator/TCB/DCPD 1/10/250 Äq.; (iv) Poly-DCPD welches durch Polymerisation mit **1** hergestellt wurde enthielt auch lösliche Anteile.

## Patentansprüche

1. Katalysator gemäß der allgemeinen Formel **I** für die ringöffnende Metathesepolymerisation (ROMP),

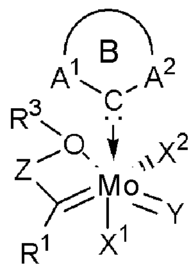

**I**

**dadurch gekennzeichnet, dass**

$A^1$ für $NR^2$, $A^2$ für $CR^2R^{2'}$ oder $NR^2$ steht, C für ein Carben-Kohlenstoffatom steht,
der Ring B ein unsubstituierter oder ein ein- oder mehrfach substituierter 5-bis 7-gliedriger Ring ist, der neben $A^1$, $A^2$ bzw. $A^3$ mindestens ein weiteres Heteroatom in Form von Stickstoff, Phosphor, Sauerstoff oder Schwefel enthalten kann und dessen Substituenten die für $R^2$ beschriebene Bedeutung haben können,
$R^2$, $R^{2'}$ und $R^3$, unabhängig voneinander, für H, einen linearen, teilcyclischen oder verzweigten $C_1$-$C_{18}$-Alkyl-, insbesondere einen $C_1$-$C_7$-Alkyl-, einen linearen, teilcyclischen oder verzweigten $C_2$-$C_{18}$-Alkenyl-, insbesondere einen $C_2$-$C_7$-Alkenyl-, einen $C_3$-$C_{12}$-Cycloalkyl-, insbesondere einen $C_3$-$C_6$-Cycloalkyl-, einen linearen, teilcyclischen oder verzweigten $C_6$-$C_{100}$-Polyoxaalkyl-, insbesondere $C_6$-$C_{30}$-Polyoxaalkyl-, einen $C_5$-$C_{14}$-Aryl- oder -Heteroaryl-Rest, einen $C_5$-$C_{14}$-Aryloxy-, einen linearen, teilcyclischen oder verzweigten $C_1$-$C_{18}$-Perfluoralkyl-, insbesondere $C_1$-$C_7$-Perfluoralkyl-, einen linearen, teilcyclischen oder verzweigten $C_1$-$C_{18}$-Perchloralkyl-, ins-

besondere einen $C_1$-$C_7$-Perchloralkyl-, einen linearen, teilcyclischen oder verzweigten teilfluorierten $C_1$-$C_{18}$-Alkyl-, insbesondere einen teilfluorierten $C_1$-$C_7$-Alkyl-, einen linearen, teilcyclischen oder verzweigten teilchlorierten $C_1$-$C_{18}$-Alkyl-, insbesondere einen teilchlorierten $C_1$-$C_7$-Alkyl-, einen per- oder teilfluorierten $C_6$-$C_{14}$-Aryl-, einen per- oder teilchlorierten $C_5$-$C_{14}$-Aryl-Rest steht, und, wenn $A^1$ und $A^2$ jeweils für $NR^2$ stehen, $R^2$ gleich oder verschieden sein kann, wobei die $C_5$-$C_{14}$-Aryl- oder -Heteroaryl-Reste und $C_5$-$C_{14}$-Aryloxyreste mit einem oder mehreren linearen, teilcyclischen oder verzweigten $C_1$-$C_{18}$-Alkylresten, insbesondere $C_1$-$C_7$-Alkylresten, substituiert sein können,

$X^1$ bzw. $X^2$ in der Formel I gleich oder verschieden sind und aus der Gruppe umfassend $C_1$-$C_{18}$ Carboxylate, $C_1$-$C_{18}$-Alkoxide, fluorierte $C_1$-$C_{18}$ Alkoxide, $C_1$-$C_{18}$ mono- oder polyhalogenierte Carboxylate, un-, ein- oder mehrfach substituierte $C_6$-$C_{18}$-Mono-, Bi- oder Terphenolate, Trifluormethansulfonat, Trifluoracetat, Chlorid, Bromid, Iodid, ausgewählt sind, wobei die Substituenten an den Mono-, Bi- oder Terphenolaten neben Halogen die gleiche Bedeutung haben können wie $R^2$,

Y ein N-Adamantyl-, ein N-*tert*-Butyl oder ein $C_6$-$C_{14}$-N-Aryl-Rest, insbesondere ein $C_6$-$C_{10}$-N-Aryl-Rest, ist, wobei der Aryl-Rest ein- oder mehrfach mit Halogen, einem linearen oder verzweigten $C_1$-$C_{18}$ Alkyl-, einem linearen oder verzweigten $C_1$-$C_{18}$ Alkyloxy- und/oder einem unsubstituierten oder substituierten Phenyl-Rest substituiert sein kann, dessen Substituenten die gleiche Bedeutung haben wie $R^2$,

Z eine lineare, teilcyclische oder verzweigte $C_1$-$C_{10}$-Alkylen-, insbesondere eine $C_1$-$C_5$-Alkylen-, eine lineare, teilcyclische oder verzweigte $C_1$-$C_{10}$-Alkylenoxy-, insbesondere eine $C_1$-$C_5$-Alkylenoxy-, eine lineare, teilcyclische oder verzweigte $C_1$-$C_{10}$-Alkylenthio-, insbesondere eine $C_1$-$C_5$-Alkylenthio-, eine lineare, teilcyclische oder verzweigte $C_1$-$C_{10}$-Alkylen-$NR^2$-, insbesondere eine $C_1$-$C_5$-Alkylen-$NR^2$-, eine $C_6$-$C_{10}$-Arylen-, eine $C_6$-$C_{10}$-Arylenoxy-, eine per- oder teilfluorierte $C_6$-$C_{14}$-Arylenoxy-, eine per- oder teilchlorierte $C_6$-$C_{14}$-Arylenoxy-, eine per- oder teilbromierte $C_6$-$C_{14}$-Arylenoxy-, eine $C_6$-$C_{14}$-Arylenthio-, eine per- oder teilfluorierte $C_6$-$C_{14}$-Arylenthio-, eine per- oder teilchlorierte $C_6$-$C_{14}$-Arylenthio-, eine per- oder teilbromierte $C_6$-$C_{14}$-Arylenthio- oder eine $C_6$-$C_{14}$-Arylen-$NR^2$-, eine per- oder teilfluorierte $C_6$-$C_{14}$-Arylen-$NR^2$-, eine per- oder teilchlorierte $C_6$-$C_{14}$-Arylen-$NR^2$-, eine per- oder teilbromierte $C_6$-$C_{14}$-Arylen-$NR^2$-, eine $C_6$-$C_{14}$-Arylen-$PR^2$-, eine per- oder teilfluorierte $C_6$-$C_{14}$-Arylen-$PR^2$-, eine per- oder teilchlorierte $C_6$-$C_{14}$-Arylen-$PR^2$-, eine per- oder teilbromierte $C_6$-$C_{14}$-Arylen-$PR^2$-, ist

$R^1$ in der Formel I, H oder ein aliphatischer oder aromatischer Rest ist, insbesondere eine lineare oder verzweigte $C_1$-$C_{18}$ Alkyl-Gruppe, bevorzugt in Form einer *tert*-Butyl- oder $CMe_2Ph$-Gruppe, oder eine unsubstituierte oder ein- oder mehrfach substituierte $C_6$-$C_{14}$-Aryl-Gruppe, wobei die Substituenten die für $R^2$ genannten Bedeutungen haben, bevorzugt in Form von 2-(2-Propoxy)phen-1-yl, 2-Methoxyphen-1-yl, 2,4,5-Trimethoxyphenyl oder Ferrocenyl.

2. Katalysator gemäß Anspruch 1, **dadurch gekennzeichnet, dass** er eine latente Wirkung bei der Polymerisierung von Dicyclopentadien zeigt.

3. Katalysator gemäß Anspruch 1 oder 2, **dadurch gekennzeichnet, dass** der Ring B ein aus der Gruppe umfassend Imidazol-2-yliden, Imidazolidin-2-yliden, 1,2,3-Triazol-5-ylidene, 1,2,4-Triazol-3-yliden oder 1,2,3,4-Tetrazol-5-yliden ausgewählter Heterozyklus ist.

4. Katalysator gemäß einem der vorstehenden Ansprüche, **dadurch gekennzeichnet, dass** der Ring B ein- oder mehrfach substituiert ist und einen oder mehrere Substituenten aufweist, die ausgewählt sind aus linearen, teilcyclischen oder verzweigten $C_1$-$C_{18}$-Alkyl-, insbesondere $C_1$-$C_7$-Alkylresten, und $C_5$-$C_{14}$-Aryl- oder -Heteroaryl-Resten und $C_5$-$C_{14}$-Aryloxyresten, die mit einem oder mehreren linearen, teilcyclischen oder verzweigten $C_1$-$C_{18}$-Alkylresten, insbesondere $C_1$-$C_7$-Alkylresten, substituiert sind.

5. Katalysator gemäß einem der vorstehenden Ansprüche, **dadurch gekennzeichnet, dass** $R^1$ in der Formel I für Wasserstoff, *tert*-Butyl, ein unsubstituiertes oder substituiertes Phenyl oder Ferrocenyl oder $CMe_2Ph$ steht.

6. Katalysator gemäß einem der vorstehenden Ansprüche, **dadurch gekennzeichnet, dass** Y in der Formel I ein N-Adamantyl-, ein N-*tert*-Butyl, oder ein N-Dialkylphenylrest, insbesondere ein N-2,6-Dialkylphenylrest oder ein N-3,5-Dialkylphenylrest oder ein 2-*tert*-Butylphenylrest ist.

7. Katalysator gemäß einem der vorstehenden Ansprüche, **dadurch gekennzeichnet, dass** $X^1$ bzw. $X^2$ in der Formel I aus $C_1$-$C_{18}$-Alkoxiden und Trifluormethansulfonat ausgewählt sind.

8. Katalysator gemäß einem der vorstehenden Ansprüche, **dadurch gekennzeichnet, dass** der Katalysator die Formel I' aufweist.

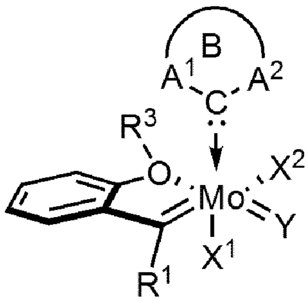

**I**

**9.** Verwendung eines Katalysators gemäß den allgemeinen Formeln **I** und **II**

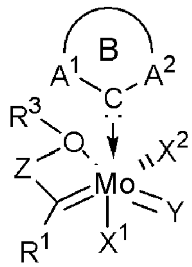

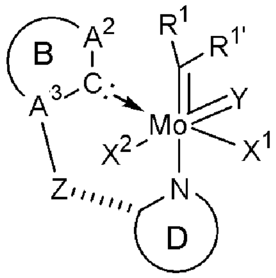

**I** **II**

**dadurch gekennzeichnet, dass**

$A^1$ für $NR^2$, $A^2$ für $CR^2R^{2'}$ oder $NR^2$ steht, $A^3$ für N steht, C für ein Carben-Kohlenstoffatom steht,
der Ring B ein unsubstituierter oder ein ein- oder mehrfach substituierter 5-bis 7-gliedriger Ring ist, der neben $A^1$, $A^2$ bzw. $A^3$ mindestens ein weiteres Heteroatom in Form von Stickstoff, Phosphor, Sauerstoff oder Schwefel enthalten kann und dessen Substituenten die für $R^2$ beschriebene Bedeutung haben können,
der Ring D ein unsubstituierter oder ein ein- oder mehrfach substituierter 5-bis 7-gliedriger, bevorzugt ein 6-gliedriger, Ring ist, der neben N ein oder mehrere weitere Heteroatome in Form von Stickstoff, Phosphor, Sauerstoff und oder Schwefel enthalten kann, und bevorzugt aromatisch ist,
$R^2$, $R^{2'}$ und $R^3$, unabhängig voneinander, für H, einen linearen, teilcyclischen oder verzweigten $C_1$-$C_{18}$-Alkyl-, insbesondere einen $C_1$-$C_7$-Alkyl-, einen linearen, teilcyclischen oder verzweigten $C_2$-$C_{18}$-Alkenyl-, insbesondere einen $C_2$-$C_7$-Alkenyl-, einen $C_3$-$C_{12}$-Cycloalkyl-, insbesondere einen $C_3$-$C_6$-Cycloalkyl-, einen linearen, teilcyclischen oder verzweigten $C_6$-$C_{100}$-Polyoxaalkyl-, insbesondere $C_6$-$C_{30}$-Polyoxaalkyl-, einen $C_5$-$C_{14}$-Aryl- oder -Heteroaryl-Rest, einen $C_5$-$C_{14}$-Aryloxy-, einen linearen, teilcyclischen oder verzweigten $C_1$-$C_{18}$-Perfluoralkyl-, insbesondere $C_1$-$C_7$-Perfluoralkyl-, einen linearen, teilcyclischen oder verzweigten $C_1$-$C_{18}$-Perchloralkyl-, insbesondere einen $C_1$-$C_7$-Perchloralkyl-, einen linearen, teilcyclischen oder verzweigten teilfluorierten $C_1$-$C_{18}$-Alkyl-, insbesondere einen teilfluorierten $C_1$-$C_7$-Alkyl-, einen linearen, teilcyclischen oder verzweigten teilchlorierten $C_1$-$C_{18}$-Alkyl-, insbesondere einen teilchlorierten $C_1$-$C_7$-Alkyl-, einen per- oder teilfluorierten $C_6$-$C_{14}$-Aryl-, einen per- oder teilchlorierten $C_5$-$C_{14}$-Aryl-Rest steht, und, wenn $A^1$ und $A^2$ jeweils für $NR^2$ stehen, $R^2$ gleich oder verschieden sein kann, wobei die $C_5$-$C_{14}$-Aryl- oder -Heteroaryl-Reste und $C_5$-$C_{14}$-Aryloxyreste mit einem oder mehreren linearen, teilcyclischen oder verzweigten $C_1$-$C_{18}$-Alkylresten, insbesondere $C_1$-$C_7$-Alkylresten, substituiert sein können,
$X^1$ bzw. $X^2$ in Formeln I bis II gleich oder verschieden sind und aus der Gruppe umfassend $C_1$-$C_{18}$ Carboxylate, $C_1$-$C_{18}$-Alkoxide, fluorierte $C_1$-$C_{18}$ Alkoxide, $C_1$-$C_{18}$ mono- oder polyhalogenierte Carboxylate, un-, ein- oder mehrfach substituierte $C_6$-$C_{18}$-Mono-, Bi- oder Terphenolate, Trifluormethansulfonat, Trifluoracetat, Chlorid, Bromid, Iodid, ausgewählt sind, wobei die Substituenten an den Mono-, Bi- oder Terphenolaten neben Halogen die gleiche Bedeutung haben können wie $R^2$,
Y ein N-Adamantyl-, ein N-*tert*-Butyl oder ein $C_6$-$C_{14}$-N-Aryl-Rest, insbesondere ein $C_6$-$C_{10}$-N-Aryl-Rest, ist, wobei der Aryl-Rest ein- oder mehrfach mit Halogen, einem linearen oder verzweigten $C_1$-$C_{18}$ Alkyl-, einem linearen oder verzweigten $C_1$-$C_{18}$ Alkyloxy- und/oder einem unsubstituierten oder substituierten Phenyl-Rest

substituiert sein kann, dessen Substituenten die gleiche Bedeutung haben wie $R^2$,
Z eine lineare, teilcyclische oder verzweigte $C_1$-$C_{10}$-Alkylen-, insbesondere eine $C_1$-$C_5$-Alkylen-, eine lineare, teilcyclische oder verzweigte $C_1$-$C_{10}$-Alkylenoxy-, insbesondere eine $C_1$-$C_5$-Alkylenoxy-, eine lineare, teilcyclische oder verzweigte $C_1$-$C_{10}$-Alkylenthio-, insbesondere eine $C_1$-$C_5$-Alkylenthio-, eine lineare, teilcyclische oder verzweigte $C_1$-$C_{10}$-Alkylen-$NR^2$-, insbesondere eine $C_1$-$C_5$-Alkylen-$NR^2$-, eine $C_6$-$C_{10}$-Arylen-, eine $C_6$-$C_{10}$-Arylenoxy-, eine per- oder teilfluorierte $C_6$-$C_{14}$-Arylenoxy-, eine per- oder teilchlorierte $C_6$-$C_{14}$-Arylenoxy-, eine per- oder teilbromierte $C_6$-$C_{14}$-Arylenoxy-, eine $C_6$-$C_{14}$-Arylenthio-, eine per- oder teilfluorierte $C_6$-$C_{14}$-Arylenthio-, eine per- oder teilchlorierte $C_6$-$C_{14}$-Arylenthio-, eine per- oder teilbromierte $C_6$-$C_{14}$-Arylenthio- oder eine $C_6$-$C_{14}$-Arylen-$NR^2$-, eine per- oder teilfluorierte $C_6$-$C_{14}$-Arylen-$NR^2$-, eine per- oder teilchlorierte $C_6$-$C_{14}$-Arylen-$NR^2$-, eine per- oder teilbromierte $C_6$-$C_{14}$-Arylen-$NR^2$-, eine $C_6$-$C_{14}$-Arylen-$PR^2$-, eine per- oder teilfluorierte $C_6$-$C_{14}$-Arylen-$PR^2$-, eine per- oder teilchlorierte $C_6$-$C_{14}$-Arylen-$PR^2$-, eine per- oder teilbromierte $C_6$-$C_{14}$-Arylen-$PR^2$-, ist
$R^1$ und $R^{1'}$ in den Formeln I bis II, unabhängig voneinander, H oder ein aliphatischer oder aromatischer Rest sind, insbesondere eine lineare oder verzweigte $C_1$-$C_{18}$ Alkyl-Gruppe, bevorzugt in Form einer *tert*-Butyl- oder $CMe_2Ph$-Gruppe, oder eine unsubstituierte oder ein- oder mehrfach substituierte $C_6$-$C_{14}$-Aryl-Gruppe, wobei die Substituenten die für $R^2$ genannten Bedeutungen haben, bevorzugt in Form von 2-(2-Propoxy)phen-1-yl, 2-Methoxyphen-1-yl, 2,4,5-Trimethoxyphenyl oder Ferrocenyl zur Herstellung von Polymeren durch Ring-öffnende Metathesepolymerisation.

**10.** Verwendung gemäß Anspruch 9 zur Herstellung von Polydicyclopentadien, bevorzugt in Form einer Beschichtung.

**11.** Verfahren zur Herstellung von Polymeren durch Ring-öffnende Metathesepolymerisation umfassend:

(i) Inkontaktbringen eines Katalysators wie in Anspruch 9 angegeben mit einem eine oder mehrere Doppelbindungen enthaltenden cyclischen Monomer,
(ii) Erwärmen des Reaktionsgemisches auf eine Temperatur, die ausreichend ist, um die Polymerisierungsreaktion zu starten.

**12.** Verfahren gemäß Anspruch 11, **dadurch gekennzeichnet, dass** das Reaktionsgemisch auf eine Temperatur von mindestens 60°C, bevorzugt mindestens 80°C und besonders bevorzugt mindestens 100°C erwärmt wird.

**13.** Verfahren gemäß Anspruch 11 oder 12, **dadurch gekennzeichnet, dass** das Reaktionsgemisch vor dem Erwärmen in (ii) als Beschichtung auf ein Substrat aufgebracht wird.

**14.** Verfahren gemäß einem der Ansprüche 11 bis 13, **dadurch gekennzeichnet, dass** das Verfahren als Reaktions-Injektionsformverfahren, Spritzpressverfahren oder Harzinjektionsverfahren ausgestaltet ist.

## Claims

**1.** A catalyst according to the general formula **I** for ring-opening metathesis polymerisation (ROMP),

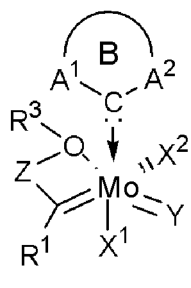

**I**

**characterised in that**

$A^1$ is $NR^2$, $A^2$ is $CR^2R^{2'}$ or $NR^2$, C is a carbene carbon atom,
the ring B is an unsubstituted or a mono- or polysubstituted 5- to 7-membered ring which, in addition to $A^1$, $A^2$

or $A^3$, respectively, may contain at least one further heteroatom in form of nitrogen, phosphorus, oxygen or sulphur and which substituents may have the meaning described for $R^2$ ,
$R^2$, $R^{2'}$ and $R^3$, independently of one another, represent H, a linear, partially cyclic or branched $C_1$-$C_{18}$ alkyl-, in particular a $C_1$-$C_7$ alkyl-, a linear, partially cyclic or branched $C_2$-$C_{18}$ alkenyl-, in particular a $C_2$-$C_7$ alkenyl-, a $C_3$-$C_{12}$ cycloalkyl-, in particular a $C_3$-$C_6$ cycloalkyl-, a linear, partially cyclic or branched $C_6$-$C_{100}$ polyoxaalkyl-, in particular $C_6$-$C_{30}$ polyoxaalkyl-, a $C_5$-$C_{14}$ aryl or heteroaryl radical, a $C_5$-$C_{14}$ aryloxy-, a linear, partially cyclic or branched $C_1$-$C_{18}$ perfluoroalkyl-, in particular $C_1$-$C_7$ perfluoroalkyl-, a linear, partially cyclic or branched $C_1$-$C_{18}$ perchloroalkyl-, in particular a $C_1$-$C_7$ perchloroalkyl-, a linear, partially cyclic or branched partially fluorinated $C_1$-$C_{18}$ alkyl-, in particular a partially fluorinated $C_1$-$C_7$ alkyl-, a linear, partially cyclic or branched partially chlorinated $C_1$-$C_{18}$ alkyl-, in particular a partially chlorinated $C_1$-$C_{17}$ alkyl-, a per- or partially fluorinated $C_6$-$C_{14}$ aryl-, a per- or partially chlorinated $C_5$-$C_{14}$ aryl radical, and, if $A^1$ and $A^2$ each represent $NR^2$, $R^2$ may be identical or different, wherein the $C_5$-$C_{14}$ aryl or heteroaryl radicals and $C_5$-$C_{14}$ aryloxy radicals may be substituted by one or more linear, partially cyclic or branched $C_1$-$C_{18}$ alkyl radicals, in particular $C_1$-$C_7$ alkyl radicals,
$X^1$ and $X^2$, respectively, in formula I are identical or different and are selected from the group comprising $C_1$-$C_{18}$ carboxylates, $C_1$-$C_{18}$ alkoxides, fluorinated $C_1$-$C_{18}$ alkoxides, mono- or polyhalogenated $C_1$-$C_{18}$ carboxylates, unsubstituted, mono- or polysubstituted $C_6$-$C_{18}$ mono-, bi- or terphenolates, trifluoromethanesulphonate, trifluoroacetate, chloride, bromide, iodide, wherein the substituents on the mono-, bi- or terphenolates in addition to halogen may have the same meaning as $R^2$,
Y is an N-adamantyl, an N-tert butyl or a $C_6$-$C_{14}$-N-aryl radical, in particular a $C_6$-$C_{10}$-N-aryl radical, where the aryl radical may be mono- or polysubstituted by halogen, a linear or branched $C_1$-$C_{18}$ alkyl-, a linear or branched $C_1$-$C_{18}$ alkyloxy and/or an unsubstituted or substituted phenyl radical whose substituents have the same meaning as $R^2$,
Z is a linear, partially cyclic or branched $C_1$-$C_{10}$ alkylene-, in particular a $C_1$-$C_5$ alkylene-, a linear, partially cyclic or branched $C_1$-$C_{10}$ alkyleneoxy-, in particular a $C_1$-$C_{15}$ alkyleneoxy-, a linear, partially cyclic or branched $C_1$-$C_{10}$ alkylenethio-, in particular a $C_1$-$C_5$ alkylenethio-, a linear, partially cyclic or branched $C_1$-$C_{10}$ alkylene-$NR^2$-, in particular a $C_1$-$C_5$ alkylene-$NR^2$-, a $C_6$-$C_{10}$ arylene-, a $C_6$-$C_{10}$ aryleneoxy-, a per- or partially fluorinated $C_6$-$C_{14}$ aryleneoxy-, a per- or partially chlorinated $C_6$-$C_{14}$-aryleneoxy-, a per- or partially brominated $C_6$-$C_{14}$ aryleneoxy-, a $C_6$-$C_{14}$ arylenethio-, a per- or partially fluorinated $C_6$-$C_{14}$ arylenethio-, a per- or partially chlorinated $C_6$-$C_{14}$ arylenethio-, a per- or partially brominated $C_6$-$C_{14}$ arylenethio- or a $C_6$-$C_{14}$ arylene-$NR^2$-, a per- or partially fluorinated $C_6$-$C_{14}$ arylene-$NR^2$-, a per- or partially chlorinated $C_6$-$C_{14}$-arylene-$NR^2$-, a per- or partially brominated $C_6$-$C_{14}$ arylene-$NR^2$-, a $C_6$-$C_{14}$ arylene-$PR^2$-, a per- or partially fluorinated $C_6$-$C_{14}$ arylene-$PR^2$-, a per- or partially chlorinated $C_6$-$C_{14}$ arylene-$PR^2$-, a per- or partially brominated $C_6$-$C_{14}$-arylene-$PR^2$-,
$R^1$ in formula I is H or an aliphatic or aromatic radical, in particular a linear or branched $C_1$-$C_{18}$ alkyl group, preferably in form of a tert-butyl or $CMe_2Ph$ group, or an unsubstituted or mono- or polysubstituted $C_6$-$C_{14}$ aryl group, the substituents having the meanings given for $R^2$, preferably in form of 2-(2-propoxy)phen-1-yl, 2-methoxyphen-1-yl, 2,4,5-trimethoxyphenyl or ferrocenyl.

**2.** The catalyst according to claim 1, **characterised in that** it exhibits a latent effect in the polymerisation of dicyclopentadiene.

**3.** The catalyst according to claim 1 or 2, **characterized in that** ring B is a heterocycle selected from the group comprising imidazol-2-ylidene, imidazolidin-2-ylidene, 1,2,3-triazol-5-ylidene, 1,2,4-triazol-3-ylidene or 1,2,3,4-tetrazol-5-ylidene.

**4.** The catalyst according to one of the preceding claims, **characterized in that** the ring B is mono- or polysubstituted and has one or more substituents selected from linear, partially cyclic or branched $C_1$-$C_{18}$ alkyl, in particular $C_1$-$C_7$ alkyl radicals, and $C_5$-$C_{14}$ aryl or heteroaryl radicals and $C_5$-$C_{14}$ aryloxy radicals which are substituted by one or more linear, partially cyclic or branched $C_1$-$C_{18}$ alkyl radicals, in particular $C_1$-$C_7$ alkyl radicals.

**5.** The catalyst according to one of the preceding claims, **characterized in that** $R^1$ in formula I is hydrogen, tert-butyl, an unsubstituted or substituted phenyl or ferrocenyl or $CMe_2Ph$.

**6.** The catalyst according to one of the preceding claims, **characterized in that** Y in formula I is an N-adamantyl, an *N*-tert-butyl, or an N-dialkylphenyl radical, in particular an N-2,6-dialkylphenyl radical or an N-3,5-dialkylphenyl radical or a 2-tert-butylphenyl radical.

**7.** The catalyst according to one of the preceding claims, **characterized in that** $X^1$ and $X^2$, respectively, in formula I are selected from $C_1$-$C_{18}$ alkoxides and trifluoromethanesulfonate.

**8.** The catalyst according to one of the preceding claims, **characterised in that** the catalyst has the formula I'

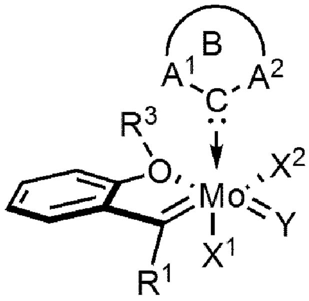

**I**

**9.** Use of a catalyst according to the general formulae **I** and **II**

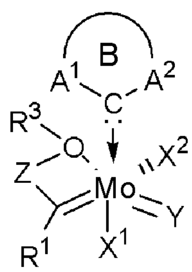

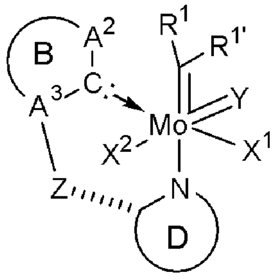

**I** **II**

**characterised in that**

$A^1$ is $NR^2$, $A^2$ is $CR^2R^{2'}$ or $NR^2$, $A^3$ is N, C is a carbene carbon atom,
the ring B is an unsubstituted or a mono- or polysubstituted 5- to 7-membered ring which, in addition to $A^1$, $A^2$ or $A^3$, respectively, may contain at least one further heteroatom in form of nitrogen, phosphorus, oxygen or sulphur and whose substituents may have the meaning described for $R^2$,
the ring D is an unsubstituted or a mono- or polysubstituted 5- to 7-membered, preferably a 6-membered, ring which, in addition to N, may contain one or more further heteroatoms in form of nitrogen, phosphorus, oxygen and/or sulphur, and is preferably aromatic,
$R^2$, $R^{2'}$ and $R^3$, independently of one another, represent H, a linear, partially cyclic or branched $C_1$-$C_{18}$ alkyl-, in particular a $C_1$-$C_7$ alkyl-, a linear, partially cyclic or branched $C_2$-$C_{18}$ alkenyl-, in particular a $C_2$-$C_7$ alkenyl-, a $C_3$-$C_{12}$ cycloalkyl-, in particular a $C_3$-$C_6$ cycloalkyl-, a linear, partially cyclic or branched $C_6$-$C_{100}$ polyoxaalkyl-, in particular $C_6$-$C_{30}$ polyoxaalkyl-, a $C_5$-$C_{14}$ aryl or heteroaryl radical, a $C_5$-$C_{14}$ aryloxy-, a linear, partially cyclic or branched $C_1$-$C_{18}$ perfluoroalkyl-, in particular $C_1$-$C_7$ perfluoroalkyl-, a linear, partially cyclic or branched $C_1$-$C_{18}$ perchloroalkyl-, in particular a $C_1$-$C_7$ perchloroalkyl-, a linear, partially cyclic or branched partially fluorinated $C_1$-$C_{18}$ alkyl-, in particular a partially fluorinated $C_1$-$C_7$ alkyl-, a linear, partially cyclic or branched partially chlorinated $C_1$-$C_{18}$ alkyl-, in particular a partially chlorinated $C_1$-$C_7$ alkyl-, a per- or partially fluorinated $C_6$-$C_{14}$ aryl-, a per- or partially chlorinated $C_5$-$C_{14}$ aryl radical, and, if $A^1$ and $A^2$ each represent $NR^2$, $R^2$ may be identical or different, where the $C_5$-$C_{14}$ aryl or heteroaryl radicals and $C_5$-$C_{14}$ aryloxy radicals may be substituted by one or more linear, partially cyclic or branched $C_1$-$C_{18}$ alkyl radicals, in particular $C_1$-$C_7$-alkyl radicals,
$X^1$ and $X^2$, respectively, in formulae I to II are identical or different and are selected from the group comprising $C_1$-$C_{18}$ carboxylates, $C_1$-$C_{18}$ alkoxides, fluorinated $C_1$-$C_{18}$ alkoxides, mono- or polyhalogenated $C_1$-$C_{18}$ carboxylates, unsubstituted, mono- or polysubstituted $C_6$-$C_{18}$ mono-, bi- or terphenolates, trifluoromethanesulphonate, trifluoroacetate, chloride, bromide, iodide, wherein the substituents on the mono-, bi- or terphenolates in addition to halogen may have the same meaning as $R^2$,
Y is an N-adamantyl, an N-tert-butyl or a $C_6$-$C_{14}$-N-aryl radical, in particular a $C_6$-$C_{10}$-N-aryl radical, where the aryl radical may be mono- or polysubstituted by halogen, a linear or branched $C_1$-$C_{18}$ alkyl-, a linear or branched $C_1$-$C_{18}$ alkyloxy and/or an unsubstituted or substituted phenyl radical whose substituents have the same meaning

as $R^2$,
Z is a linear, partially cyclic or branched $C_1$-$C_{10}$ alkylene-, in particular a $C_1$-$C_5$ alkylene-, a linear, partially cyclic or branched $C_1$-$C_{10}$ alkyleneoxy-, in particular a $C_1$-$C_5$ alkyleneoxy-, a linear, partially cyclic or branched $C_1$-$C_{10}$ alkylenethio-, in particular a $C_1$-$C_5$ alkylenethio-, a linear, partially cyclic or branched $C_1$-$C_{10}$ alkylene-$NR^2$-, in particular a $C_1$-$C_5$-alkylene-$NR^2$-, a $C_6$-$C_{10}$ arylene-, a $C_6$-$C_{10}$ aryleneoxy-, a per- or partially fluorinated $C_6$-$C_{14}$ aryleneoxy-, a per- or partially chlorinated $C_6$-$C_{14}$ aryleneoxy-, a per- or partially brominated $C_6$-$C_{14}$ aryleneoxy-, a $C_6$-$C_{14}$ arylenethio-, a per- or partially fluorinated $C_6$-$C_{14}$ arylenethio-, a per- or partially chlorinated $C_6$-$C_{14}$ arylenethio-, a per- or partially brominated $C_6$-$C_{14}$ arylenethio- or a $C_6$-$C_{14}$ arylene-$NR^2$-, a per- or partially fluorinated $C_6$-$C_{14}$ arylene-$NR^2$-, a per- or partially chlorinated $C_6$-$C_{14}$ arylene-$NR^2$-, a per- or partially-brominated $C_6$-$C_{14}$ arylene-$NR^2$-, a $C_6$-$C_{14}$ arylene-$PR^2$-, a per- or partially fluorinated $C_6$-$C_{14}$ arylene-$PR^2$-, a per- or partially chlorinated $C_6$-$C_{14}$ arylene-$PR^2$-, a per- or partially brominated $C_6$-$C_{14}$ arylene-$PR^2$-,
$R^1$ and $R^{1'}$ in the formulae I to II are, independently of one another, H or an aliphatic or aromatic radical, in particular a linear or branched $C_1$-$C_{18}$ alkyl group, preferably in form of a tert-butyl or $CMe_2Ph$ group, or an unsubstituted or mono- or polysubstituted $C_6$-$C_{14}$ aryl group, wherein the substituents have the meanings given for $R^2$, preferably in form of 2-(2-propoxy)phen-1-yl, 2-methoxyphen-1-yl, 2,4,5-trimethoxyphenyl or ferrocenyl,
for the preparation of polymers by ring-opening metathesis polymerisation.

**10.** Use according to claim 9 for the preparation of polydicyclopentadiene, preferably in the form of a coating.

**11.** A process for the preparation of polymers by ring-opening metathesis polymerisation comprising:

(i) contacting a catalyst as indicated in claim 9 with a cyclic monomer containing one or more double bonds,
(ii) heating the reaction mixture to a temperature sufficient to start the polymerisation reaction.

**12.** The process according to claim 11, **characterized in that** the reaction mixture is heated to a temperature of at least 60°C, preferably at least 80°C and particularly preferably at least 100°C.

**13.** The process according to claim 11 or 12, **characterized in that** the reaction mixture is applied to a substrate as a coating before heating in (ii).

**14.** The process according to one of claims 11 to 13, **characterised in that** the process is a reaction injection moulding process, an injection compression moulding process or a resin injection process.

## Revendications

**1.** Catalyseur selon la formule générale I pour la polymérisation par métathèse d'ouverture de cycle (ROMP)

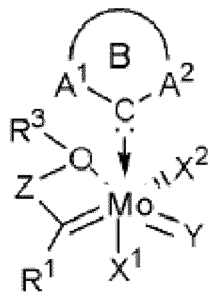

**I**

,

**caractérisé en ce que**

$A^1$ représente $NR^2$, $A^2$ représente $CR^2R^{2'}$ ou $NR^2$, C représente un atome de carbone-carbène,
le cycle B est un cycle non substitué ou un cycle à 5 à 7 chaînons monosubstitué ou polysubstitué, qui peut contenir, outre $A^1$, $A^2$ ou $A^3$, au moins un autre hétéroatome sous la forme d'azote, de phosphore, d'oxygène

ou de soufre et dont les substituants peuvent avoir la signification décrite pour $R^2$,
$R^2$, $R^{2'}$ et $R^3$ représentent H, un radical alkyle en $C_1$-$C_{18}$ linéaire, partiellement cyclique ou ramifié, en particulier un radical alkyle en $C_1$-$C_7$, un radical alcényle en $C_2$-$C_{18}$ linéaire, partiellement cyclique ou ramifié, en particulier un radical alcényle en $C_2$-$C_7$, un radical cycloalkyle en $C_3$-$C_{12}$, en particulier un radical cycloalkyle en $C_3$-$C_6$, un radical polyoxaalkyle en $C_6$-$C_{100}$ linéaire, partiellement cyclique ou ramifié, en particulier un radical polyoxaalkyle en $C_6$-$C_{30}$, un radical aryle en $C_5$-$C_{14}$ ou un radical hétéroaryle, un radical aryloxy en $C_5$-$C_{14}$, un radical perfluoroalkyle en $C_1$-$C_{18}$ linéaire, partiellement cyclique ou ramifié, en particulier un radical perfluoroalkyle en $C_1$-$C_7$, un radical perchloroalkyle en $C_1$-$C_{18}$ linéaire, partiellement cyclique ou ramifié, en particulier un radical perchloroalkyle en $C_1$-$C_7$, un radical alkyle en $C_1$-$C_{18}$ partiellement fluoré linéaire, partiellement cyclique ou ramifié, en particulier un radical alkyle en $C_1$-$C_7$ partiellement fluoré, un radical alkyle en $C_1$-$C_{18}$ linéaire, partiellement cyclique ou ramifié, en particulier un radical alkyle en $C_1$-$C_7$ partiellement chloré, un radical aryle en $C_6$-$C_{14}$ perfluoré ou partiellement fluoré, un radical aryle en $C_5$-$C_{14}$ perchloré ou partiellement chloré, et, lorsque $A^1$ et $A^2$ représentent respectivement $NR^2$, $R^2$ peut être identique ou différent, dans lequel les radicaux aryle en $C_5$-$C_{14}$ ou hétéroaryle et les radicaux aryloxy en $C_5$-$C_{14}$ peuvent être substitués par un ou plusieurs radicaux alkyle en $C_1$-$C_{18}$ linéaires, partiellement cycliques ou ramifiés, en particulier des radicaux alkyle en $C_1$-$C_7$,
$X^1$ ou $X^2$ dans la formule I sont identiques ou différents et sont choisis parmi le groupe comprenant des carboxylates en $C_1$-$C_{18}$, des alcoxydes en $C_1$-$C_{18}$, des alcoxydes en $C_1$-$C_{18}$ fluorés, des carboxylates en $C_1$-$C_{18}$ mono- ou polyhalogénés, des mono-, bi-, terphénolates en $C_6$-$C_{18}$ non substitués, mono- ou polysubstitués, du trifluorométhanesulfonate, du trifluoroacétate, du chlorure, du bromure, de l'iodure, dans lequel les substituants sur les mono-, bi- ou terphénolates peuvent avoir, outre l'halogène, la même signification que $R^2$,
Y est un radical N-adamantyle, un radical N-tert-butyle ou un radical N-aryle en $C_6$-$C_{14}$, en particulier un radical N-aryle en $C_6$-$C_{10}$, dans lequel le radical aryle peut être mono- ou polysubstitué avec de l'halogène, un radical alkyle en $C_1$-$C_{18}$ linéaire ou ramifié, un radical alkyloxy en $C_1$-$C_{18}$ linéaire ou ramifié et/ou un radical phényle non substitué ou substitué, dont les substituants ont la même signification que $R^2$,
Z est un radical alkylène en $C_1$-$C_{10}$ linéaire, partiellement cyclique ou ramifié, en particulier un radical alkylène en $C_1$-$C_5$, un radical alkylèneoxy en $C_1$-$C_{10}$ linéaire, partiellement cyclique ou ramifié, en particulier un radical alkylèneoxy en $C_1$-$C_5$, un radical alkylènethio en $C_1$-$C_{10}$ linéaire, partiellement cyclique ou ramifié, en particulier un radical alkylènethio en $C_1$-$C_5$, un radical - $NR^2$-alkylène en $C_1$-$C_{10}$ linéaire, partiellement cyclique ou ramifié, en particulier un radical -$NR^2$-alkylène en $C_1$-$C_5$, un radical arylène en $C_6$-$C_{10}$, un radical arylèneoxy en $C_6$-$C_{10}$, un radical arylèneoxy en $C_6$-$C_{14}$ perfluoré ou partiellement fluoré, un radical arylèneoxy en $C_6$-$C_{14}$ perchloré ou partiellement chloré, un radical arylèneoxy en $C_6$-$C_{14}$ perbromé ou partiellement bromé, un radical arylènethio en $C_6$-$C_{14}$, un radical arylènethio en $C_6$-$C_{14}$ perfluoré ou partiellement fluoré, un radical arylènethio en $C_6$-$C_{14}$ perchloré ou partiellement chloré, un radical arylènethio en $C_6$-$C_{14}$ perbromé ou partiellement bromé ou un radical -$NR^2$-arylène en $C_6$-$C_{14}$, un radical -$NR^2$-arylène en $C_6$-$C_{14}$ perfluoré ou partiellement fluoré, un radical -$NR^2$-arylène en $C_6$-$C_{14}$ perchloré ou partiellement chloré, un radical -$NR^2$-arylène en $C_6$-$C_{14}$ perbromé ou partiellement bromé, un radical -$PR^2$-arylène en $C_6$-$C_{14}$, un radical -$PR^2$-arylène en $C_6$-$C_{14}$ perfluoré ou partiellement fluoré, un radical -$PR^2$-arylène en $C_6$-$C_{14}$ perchloré ou partiellement chloré, un radical -$PR^2$-arylène en $C_6$-$C_{14}$ perbromé ou partiellement bromé,
$R^1$ est dans la formule I H ou un radical aliphatique ou aromatique, en particulier un groupe alkyle en $C_1$-$C_{18}$ linéaire ou ramifié, de manière préférée sous la forme d'un groupe tert-butyle ou $CMe_2Ph$, ou un groupe aryle en $C_6$-$C_{14}$ non substitué ou mono- ou polysubstitué, dans lequel les substituants ont les significations évoquées pour $R^2$, de manière préférée sous la forme de 2-(2-propoxy)phène-1-yle, 2-méthoxyphène-1-yle, 2,4,5-triméthoxyphényle ou ferrocényle.

2. Catalyseur selon la revendication 1, **caractérisé en ce qu'**il affiche un effet latent lors de la polymérisation de dicyclopentadiène.

3. Catalyseur selon la revendication 1 ou 2, **caractérisé en ce que** le cycle B est un hétérocycle choisi parmi le groupe comprenant de l'imidazole-2-ylidène, de l'imidazoline-2-ylidène, du 1,2,3-triazole-5-ylidène, 1,2,4,triazole,3-ylidène ou 1,2,3,4-tétrazole-5-ylidène.

4. Catalyseur selon l'une quelconque des revendications précédentes, **caractérisé en ce que** le cycle B est mono- ou polysubstitué et présente un ou plusieurs substituants, qui sont choisis parmi des radicaux alkyle en $C_1$-$C_{18}$ linéaires, partiellement cycliques ou ramifiés, en particulier des radiaux alkyle en $C_1$-$C_7$, des radicaux aryle en $C_5$-$C_{14}$ ou des radicaux hétéroaryle, et des radicaux aryloxy en $C_5$-$C_{14}$, qui sont substitués par un ou plusieurs radicaux alkyle en $C_1$-$C_{18}$ linéaires, partiellement cycliques ou ramifiés, en particulier des radicaux alkyle en $C_1$-$C_7$.

**5.** Catalyseur selon l'une quelconque des revendications précédentes, **caractérisé en ce que** $R^1$ représente dans la formule I de l'hydrogène, du tert-butyle, un phényle ou ferrocényle non substitué ou substitué ou du $CMe_2Ph$.

**6.** Catalyseur selon l'une quelconque des revendications précédentes, **caractérisé en ce que** Y est dans la formule I un radical N-adamantyle, un N-tert-butyle ou un radical N-dialkylphényle, en particulier un radical N-2,6-dialkylphényle ou un radical N-3,5-dialkylphényle ou un radical 2-tert-butylphényle.

**7.** Catalyseur selon l'une quelconque des revendications précédentes, **caractérisé en ce que** $X^1$ ou $X^2$ dans la formule I sont choisis parmi des alcoxydes en $C_1$-$C_{18}$ et du trifluorométhanesulfonate.

**8.** Catalyseur selon l'une quelconque des revendications précédentes, **caractérisé en ce que** le catalyseur présente la formule I'

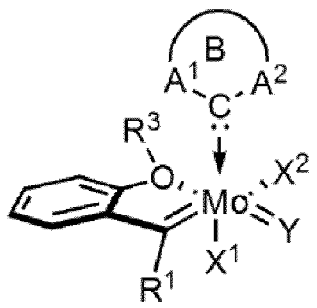

I

.

**9.** Utilisation d'un catalyseur selon les formules générales I et II

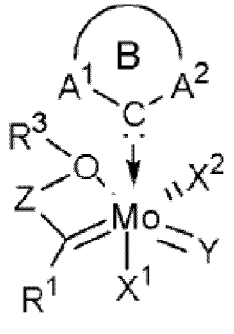

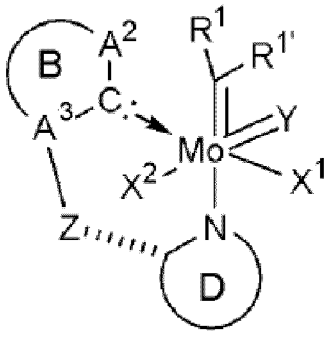

I II

,

**caractérisée en ce que**

$A^1$ représente $NR^2$, $A^2$ représente $CR^2R^{2'}$ ou $NR^2$, $A^3$ représente N, C représente un atome de carbone-carbène, le cycle B est un cycle non substitué ou un cycle à 5 à 7 chaînons monosubstitué ou polysubstitué, qui peut contenir, outre $A^1$, $A^2$ ou $A^3$, au moins un autre hétéroatome sous la forme d'azote, de phosphore, d'oxygène ou de soufre et dont les substituants peuvent avoir la signification décrite pour $R^2$,
le cycle D est un cycle non substitué ou un cycle à 5 à 7 chaînons monosubstitué ou polysubstitué, de manière préférée un cycle à 6 chaînons, qui peut contenir, outre N, un ou plusieurs autres hétéroatomes sous la forme d'azote, de phosphore, d'oxygène ou de soufre, et est de manière préférée aromatique,
$R^2$, $R^{2'}$ et $R^3$ représentent, indépendamment les uns des autres, H, un radical alkyle en $C_1$-$C_{18}$ linéaire, partiellement cyclique ou ramifié, en particulier un radical alkyle en $C_1$-$C_7$, un radical alcényle en $C_2$-$C_{18}$ linéaire, partiellement cyclique ou ramifié, en particulier un radical alcényle en $C_2$-$C_7$, un radical cycloalkyle en $C_3$-$C_{12}$, en particulier un radical cycloalkyle en $C_3$-$C_6$, un radical polyoxaalkyle en $C_6$-$C_{100}$ linéaire, partiellement cyclique

ou ramifié, en particulier un radical polyoxaalkyle en $C_6$-$C_{30}$, un radical aryle en $C_5$-$C_{14}$ ou un radical hétéroaryle, un radical aryloxy en $C_5$-$C_{14}$, un radical perfluoroalkyle en $C_1$-$C_{18}$ linéaire, partiellement cyclique ou ramifié, en particulier un radical perfluoroalkyle en $C_1$-$C_7$, un radical perchloroalkyle en $C_1$-$C_{18}$ linéaire, partiellement cyclique ou ramifié, en particulier un radical perchloroalkyle en $C_1$-$C_7$, un radical alkyle en $C_1$-$C_{18}$ partiellement fluoré linéaire, partiellement cyclique ou ramifié, en particulier un radical alkyle en $C_1$-$C_7$ partiellement fluoré, un radical alkyle en $C_1$-$C_{18}$ linéaire, partiellement cyclique ou ramifié, en particulier un radical alkyle en $C_1$-$C_7$ partiellement chloré, un radical aryle en $C_6$-$C_{14}$ perfluoré ou partiellement fluoré, un radical aryle en $C_5$-$C_{14}$ perchloré ou partiellement chloré, et, lorsque $A^1$ et $A^2$ représentent respectivement $NR^2$, $R^2$ peut être identique ou différent, dans lequel les radicaux aryle en $C_5$-$C_{14}$ ou hétéroaryle et les radicaux aryloxy en $C_5$-$C_{14}$ peuvent être substitués par un ou plusieurs radicaux alkyle en $C_1$-$C_{18}$ linéaires, partiellement cycliques ou ramifiés, en particulier des radicaux alkyle en $C_1$-$C_7$,
$X^1$ ou $X^2$ dans les formules I à II sont identiques ou différents et sont choisis parmi le groupe comprenant des carboxylates en $C_1$-$C_{18}$, des alcoxydes en $C_1$-$C_{18}$, des alcoxydes en $C_1$-$C_{18}$ fluorés, des carboxylates en $C_1$-$C_{18}$ mono- ou polyhalogénés, des mono-, bi-, terphénolates en $C_6$-$C_{18}$ non substitués, mono- ou polysubstitués, du trifluorométhanesulfonate, du trifluoroacétate, du chlorure, du bromure, de l'iodure, dans lequel les substituants sur les mono-, bi- ou terphénolates peuvent avoir, outre l'halogène, la même signification que $R^2$,
Y est un radical N-adamantyle, un radical N-tert-butyle ou un radical N-aryle en $C_6$-$C_{14}$, en particulier un radical N-aryle en $C_6$-$C_{10}$, dans lequel le radical aryle peut être mono- ou polysubstitué avec de l'halogène, un radical alkyle en $C_1$-$C_{18}$ linéaire ou ramifié, un radical alkyloxy en $C_1$-$C_{18}$ linéaire ou ramifié et/ou un radical phényle non substitué ou substitué, dont les substituants ont la même signification que $R^2$,
Z est un radical alkylène en $C_1$-$C_{10}$ linéaire, partiellement cyclique ou ramifié, en particulier un radical alkylène en $C_1$-$C_5$, un radical alkylèneoxy en $C_1$-$C_{10}$ linéaire, partiellement cyclique ou ramifié, en particulier un radical alkylèneoxy en $C_1$-$C_5$, un radical alkylènethio en $C_1$-$C_{10}$ linéaire, partiellement cyclique ou ramifié, en particulier un radical alkylènethio en $C_1$-$C_5$, un radical - $NR^2$-alkylène en $C_1$-$C_{10}$ linéaire, partiellement cyclique ou ramifié, en particulier un radical -$NR^2$-alkylène en $C_1$-$C_5$, un radical arylène en $C_6$-$C_{10}$, un radical arylèneoxy en $C_6$-$C_{10}$, un radical arylèneoxy en $C_6$-$C_{14}$ perfluoré ou partiellement fluoré, un radical arylèneoxy en $C_6$-$C_{14}$ perchloré ou partiellement chloré, un radical arylèneoxy en $C_6$-$C_{14}$ perbromé ou partiellement bromé, un radical arylènethio en $C_6$-$C_{14}$, un radical arylènethio en $C_6$-$C_{14}$ perfluoré ou partiellement fluoré, un radical arylènethio en $C_6$-$C_{14}$ perchloré ou partiellement chloré, un radical arylènethio en $C_6$-$C_{14}$ perbromé ou partiellement bromé ou un radical -$NR^2$-arylène en $C_6$-$C_{14}$, un radical -$NR^2$-arylène en $C_6$-$C_{14}$ perfluoré ou partiellement fluoré, un radical -$NR^2$-arylène en $C_6$-$C_{14}$ perchloré ou partiellement chloré, un radical -$NR^2$-arylène en $C_6$-$C_{14}$ perbromé ou partiellement bromé, un radical -$PR^2$-arylène en $C_6$-$C_{14}$, un radical -$PR^2$-arylène en $C_6$-$C_{14}$ perfluoré ou partiellement fluoré, un radical -$PR^2$-arylène en $C_6$-$C_{14}$ perchloré ou partiellement chloré, un radical -$PR^2$-arylène en $C_6$-$C_{14}$ perbromé ou partiellement bromé,
$R^1$ et $R^{1'}$ sont, dans les formules I à II, indépendamment l'un de l'autre, H ou un radical aliphatique ou aromatique, en particulier un groupe alkyle en $C_1$-$C_{18}$ linéaire ou ramifié, de manière préférée sous la forme d'un groupe tert-butyle ou $CMe_2Ph$, ou un groupe aryle en $C_6$-$C_{14}$ non substitué ou mono- ou polysubstitué, dans lequel les substituants ont les significations évoquées pour $R^2$, de manière préférée sous la forme de 2-(2-propoxy)phène-1-yle, 2-méthoxyphène-1-yle, 2,4,5-triméthoxyphényle ou ferrocényle pour la fabrication de polymères par polymérisation par métathèse d'ouverture de cycle.

**10.** Utilisation selon la revendication 9 pour fabriquer du polydicyclopentadiène, de manière préférée sous la forme d'un revêtement.

**11.** Procédé pour fabriquer des polymères par polymérisation par métathèse d'ouverture de cycle comprenant :

(i) la mise en contact d'un catalyseur tel qu'indiqué dans la revendication 9 avec un monomère cyclique contenant une ou plusieurs doubles liaisons,
(ii) le chauffage du mélange réactionnel à une température, qui est suffisante pour démarrer la réaction de polymérisation.

**12.** Procédé selon la revendication 11, **caractérisé en ce que** le mélange réactionnel est chauffé à une température d'au moins 60 °C, de manière préférée d'au moins 80 °C et de manière particulièrement préférée d'au moins 100 °C.

**13.** Procédé selon la revendication 11 ou 12, **caractérisé en ce que** le mélange réactionnel est appliqué sur un substrat en tant que revêtement avec le chauffage de l'étape (ii).

**14.** Procédé selon l'une quelconque des revendications 11 à 13, **caractérisé en ce que** le procédé est configuré en

tant que procédé de réaction de moulage par injection, procédé par injection-compression ou procédé d'injection de résine.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **M.R. BUCHMEISER et al.** *Chemistry - A European Journal,* 2010, vol. 16, 12928-12934
- **VERPOORT et al.** *J. of Polym. Sci. Part A: Polymer Chemistry,* 2010, vol. 48, 302-310
- **ELSER I et al.** *Organometallics,* 2016, vol. 35, 4106-11
- **A. HAFNER et al.** *Angew. Chem. Int. Ed.,* 1997, vol. 36, 2121-2124